(19)

**Europäisches Patentamt**
**European Patent Office**
**Office européen des brevets**

(11) **EP 4 696 428 A2**

(12) **EUROPEAN PATENT APPLICATION**

(43) Date of publication:
**18.02.2026 Bulletin 2026/08**

(21) Application number: **25203832.8**

(22) Date of filing: **04.08.2022**

(51) International Patent Classification (IPC):
***B21C 51/00*** (2006.01)

(52) Cooperative Patent Classification (CPC):
**B21B 28/02; B21C 51/00; B23K 26/0624;**
**B23K 26/0823; B23K 26/0869; B23K 26/3576;**
**B23K 26/361; B23K 26/362;** B21B 38/00;
B21B 38/02; B21B 2267/06; B21B 2267/10;
B21B 2267/18

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.08.2021 IT 202100021263**

(62) Document number(s) of the earlier application(s) in
accordance with Art. 76 EPC:
**22764454.9 / 4 380 737**

(71) Applicant: **Tenova S.p.A.**
**20149 Milano (IT)**

(72) Inventors:
 • **GABOARDI, Paolo**
  **20149 Milano (IT)**
 • **TREVISAN, Claudio**
  **20149 Milano (IT)**
 • **GARIANO, Andrea**
  **20149 Milano (IT)**

 • **BOSELLI, Giovanni**
  **20149 Milano (IT)**
 • **PALLOTTI, Paolo**
  **20149 Milano (IT)**
 • **DEMIR, Ali Gokhan**
  **20133 Milano (IT)**
 • **PREVITALI, Barbara**
  **20133 Milano (IT)**

(74) Representative: **PGA S.p.A.**
**Via Mascheroni, 31**
**20145 Milano (IT)**

Remarks:
•This application was filed on 22-09-2025 as a
divisional application to the application mentioned
under INID code 62.
•Claims filed after the date of filing of the application
(Rule 68(4) EPC).

(54) **APPARATUS AND PROCESS FOR SURFACE PROCESSING OF CYLINDRICAL BODIES, IN PARTICULAR LAMINATING CYLINDERS**

(57) Apparatus and method for surface processing of cylindrical bodies, particularly for surface restoration of laminating cylinders. The apparatus includes a workstation configured to receive a cylindrical body having a lateral surface movable by rotation about an axis of rotation, a laser emitter cooperating with the workstation and configured to emit at least one laser beam, a profile detector configured to detect a detected surface profile of the lateral surface of the cylindrical body, and a control unit operatively configured to perform at least one procedure for restoring the lateral surface of the cylindrical body. The restoration procedure includes a procedure for detecting the surface profile of the cylindrical body, including a step of comparing the detected surface profile with a target surface profile, and a removal procedure including a step of emitting the laser beam on the cylindrical body to remove metallic material and to obtain the target surface profile.

FIG. 1

EP 4 696 428 A2

## Description

Field of invention

The invention is directed to an apparatus and method for processing, by means of a laser emitter, the side or shell surface of cylindrical bodies, for example, laminating cylinders in rolling mills. In detail, the invention finds preferential application for the grinding of rolling cylinders by means of a laser emitter. The laminating cylinders are intended for use in rolling mills for hot or cold rolling of flat metal products, especially strips of steel sheet, aluminum or other metal or polymeric materials, or for use in papermaking plants.

Background

The rolling of strips of steel, aluminum or other metal or polymeric sheet materials or paper is done by the use of laminating ( or "rolling") cylinders in rolling mills. Such strips are forced to pass between opposing rolling cylinders, which exert high pressure on the strip. The laminating cylinders may have a pattern or texturing configured to be replicated, during the rolling phase, on the laminated web on its lateral surface or mantle, also called the "table" of the laminating cylinder in the jargon. The pattern or texturing of the laminating cylinder table may include a predetermined surface roughness to be replicated on the web to be laminated.

Texturization processes performed by electrical discharge (EDT) or by a laser emitter acting on the lateral surface of the rolling cylinder are known. The surface roughness generated by the laser may be a function of the intensity of the laser beam and the distance interposed between the laser emitter and the lateral surface of the rolling cylinder.

During rolling, rolls undergo progressive deterioration determined by pressure, abrasion, temperature, type of processing, and processed material. For example, the lateral surface, or table, of a rolling cylinder may retain dirt including traces of lubricants, flakes or metal residue, adversely affecting the processing quality of rolled strip.

Additionally, the lateral surface of a rolling cylinder may wear as rolling cycles progress: for example, cylinders may gradually lose the surface roughness characteristics required to generate the required roughness on the metal strip. The surface roughness of rolling cylinders may be altered in the value of characteristic parameters such as Ra or $Rpc$ above a predetermined limit, such as 20 percent of the nominal value.

Cracks, dents and localized damage of various types, shapes and depths may also occur on the lateral surface of the laminating cylinder, adversely affecting the final result on the laminated web.

Finally, the surface layer of the side or table surface of a rolling cylinder is subject to high stresses: this may generate fatigue phenomena, compromising the required surface characteristics.

Following the deterioration of a rolling cylinder, it is necessary to temporarily remove the cylinder from the rolling mill to restore its original surface characteristics.

To date, such restoration is carried out by machining, such as by grinding the cylinder using a grinding wheel process. Grinding is currently the only technological process that may be used to achieve the desired result, mainly because of the hardness of the material of which the cylinder is made and the roughness values to be obtained. Cylinder grinding involves the removal of a predetermined thickness of material from the lateral surface of the cylinder or table in order to restore proper roughness, eliminate surface defects such as cracks or dents, and restore the profile of the cylinder to the tolerances required by the rolling mill (shape of the generating element or profile, roundness, eccentricity).

The grinding technology may effectively and efficiently achieve roughness (Ra) likely in the range of 0.02 $\mu$m to 2.5 $\mu$m. Within that range, the grinding process requires making a predetermined number of passes combined with machining steps generally identified as roughing, semi-finishing and finishing, between which machining parameters are changed and, if necessary, in which the grinding wheel is changed to achieve the desired final roughness.

A conventional grinding machine requires relatively high electrical power, particularly on the order of a few tens or hundreds of kW, to enable the rolling cylinder to rotate and to overcome the friction generated by the grinding wheel forcing contact of the lateral surface of the cylinder.

The mechanical grinding operation using a grinding wheel is also accompanied by high heating of the surface of the cylinder and the cutting tool (the grinding wheel, in fact), which results in the need to use a cooling fluid to keep the local temperature within acceptable limits. The waste from the grinding process thus includes chips of the constituent metal of the rolling cylinder, emery grains, binder resin particles and emulsified cooling fluid, to define waste wet sludge to be treated appropriately.

The high electrical power required, the high thermal energy generated by grinding wheel/surface friction, and the presence of waste wet sludge contribute to the high cost of the process of restoring rolling/laminating cylinders or, generically, cylindrical bodies.

Objectives of the invention

It is therefore the purpose of the present invention to solve at least one of the drawbacks and/or limitations of the previous solutions.

A first objective is to provide a method and apparatus for grinding the lateral or mantle surface of cylindrical bodies that is more energy efficient.

A further objective is to provide a method and apparatus for grinding the lateral or mantle surface of cylindrical bodies that may effectively restore the original lateral surface and tolerances in adequate time.

A further objective is to provide a method and apparatus for grinding the side or mantle surface of cylindrical bodies where the waste material is easily removed from the processing area.

An additional objective is to provide a method and apparatus for grinding the side or mantle surface of cylindrical bodies that may reduce the cost of waste material disposal.

An additional objective is to provide a method and apparatus for grinding the side or mantle surface of cylindrical bodies that may reduce the cost of the grinding process.

An additional objective is to provide a method and apparatus for grinding the side or shell surface of cylindrical bodies that may optimize the amount of material to be removed during the grinding process.

These objectives and others, which will appear more from the following description and the following aspects, are substantially achieved by a method and apparatus in accordance with one or more of the following claims and/or aspects.

BRIEF DESCRIPTION OF THE DRAWINGS

Some embodiments and some aspects of the invention will be described below with reference to the attached drawings, provided for illustrative purposes only and therefore not limiting in which:

- Figures 1-4 are top-down views of an apparatus according with the present invention;
- Figure 5 is a schematic view of a difference between the detected profile and the target profile of the lateral surface of the cylindrical body;
- Figures 6a-6p are schematic views of consecutive steps of the removal procedure;
- Figures 7a and 7b are schematic views of the peak and average power emitted by a continuous or pulsed laser beam as a function of time;
- Figure 8 schematically shows method steps in accordance with the present invention;
- Figures 9a, 9b and 9c schematically show a laser beam incident on the lateral surface of the cylindrical body and in which the focus point is positioned at different heights $\Delta f$;
- Figure 10 schematically shows an apparatus, according to the present invention, bearing a cylindrical body with partially overlapping laser imprints;
- Figures 11 and 12 schematically show an apparatus, according to a further embodiment of the present invention, bearing a cylindrical body with partially overlapping laser footprints;
- Figure 12b schematically shows an apparatus, according to an embodiment of the present invention, bearing a cylindrical body with partially overlapping laser imprints defining a serpentine trajectory;
- Figure 13 shows a flow chart representing method steps of the restoration procedure including the step of defining overlapping portions between laser footprints;
- Figure 14 shows a flow chart representing method steps of the restoration procedure including both the step of detecting the outer profile of the cylindrical body and the step of defining overlapping portions between laser footprints.

SUMMARY

A first aspect is directed to an apparatus (10) for surface processing of cylindrical bodies (1), particularly for surface restoration of laminating cylinders, **said apparatus** including:

- a workstation (100) defining at least one operating location arranged to receive, in an apparatus (10) operating condition, a cylindrical body (1) having a lateral surface (4), said workstation (100) being configured to rotationally support the cylindrical body (1) according to a predetermined axis of rotation (K),
- at least one laser emitter (600, 600") cooperating with the workstation (100) and configured to emit at least one laser beam in the direction of said operating site, said laser emitter (600, 600") being movable at least along a main axis (Z) substantially parallel to the axis of rotation (K) of the cylindrical body (1),
- at least one profile detector (700) movable at least along a detection axis (Y) substantially parallel to the axis of rotation (K) of the cylindrical body (1) and configured to detect, under said condition of apparatus use, a detected surface profile of the lateral surface (4) of the cylindrical body (1),

- a control unit (15) operatively connected with the laser emitter (600, 600") and to the at least one profile detector (700), said control unit (15) being configured to perform, during said condition of use of the apparatus (1), at least one restoration procedure of the lateral surface (4) of the cylindrical body (1), said restoration procedure including:

   o a detection procedure including at least the following steps:

   - detecting, by means of said profile detector (700), the detected surface profile (DSP) of the cylindrical body (1);
   - comparing said detected surface profile (DSP) with a target surface profile (TSP) of the cylindrical body (1);

   o a removal procedure, performed in accordance with said comparison, including at least the following step:

   - emitting the laser beam through the laser emitter (600, 600") toward the lateral surface (4) of the cylindrical body (1) to obtain said target surface profile (TSP), said laser beam being configured to locally remove metallic material from the cylindrical body (1).

A 2nd aspect is directed to a method for grinding rolling/laminating cylinders, optionally by means of an apparatus in accordance with the previous aspect, in which said cylindrical body (1) comprises a lateral surface (4) extending in length along an axis of rotation (K) between a first and a second end of the cylindrical body (1), **said method** including at least one restoration procedure (2000) of the lateral surface (4) of the cylindrical body (1), said restoration procedure including:

   o a detection procedure (2001) including at least the following steps:

   - detecting, using a profile detector (700), a surface profile (DSP) of the lateral surface (4) of the cylindrical body (1);
   - comparing said detected surface profile (DSP) with a target surface profile (TSP) of the cylindrical body (1);

   o a removal procedure (2002), performed in accordance with said comparison, including at least the following step:

   - emitting a laser beam through a laser emitter (600, 600") toward the lateral surface (4) of the cylindrical body (1) to obtain said target surface profile (TSP), said laser beam locally removing metallic material from the cylindrical body (1).

In a further aspect in accordance with any of the preceding aspects, said rolling cylinders are intended to perform rolling operations of metallic materials or for the production of paper sheets.

A 3rd aspect is directed to a method for surface processing of a cylindrical body (1), optionally by means of an apparatus in accordance with the 1st aspect, particularly for surface restoration of laminating cylinders, in which said cylindrical body (1) is movable by rotation about an axis of rotation (K) and includes a lateral surface (4) extending in length between a first and a second end of the cylindrical body (1),

said method including at least one restoration procedure of the lateral surface (4) of the cylindrical body (1), said restoration procedure including:

   o a detection procedure including at least the following steps:

   - detecting, using a profile detector (700), a surface profile of the lateral surface (4) of the cylindrical body (1);
   - comparing said detected surface profile with a target surface profile (TSP) of the cylindrical body (1);

   o a removal procedure, performed in accordance with said comparison, including at least the following step:

   - emitting a laser beam through a laser emitter (600, 600") toward the lateral surface (4) of the cylindrical body (1) to obtain said target surface profile (TSP), said laser beam locally removing metallic material from the cylindrical body (1).

In a 4th aspect in accordance with any of the previous aspects, said surface profile and said target surface profile (TSP) of the cylindrical body (1) comprise at least one geometric feature that varies according to at least one among:

- an angular position of the cylindrical body (1), and
- a linear position along the detection axis (Y),

and in which said at least one geometric feature of the detected surface profile (DSP) includes at least one respective altimetric parameter representative of a diameter of the cylindrical body (1) and/or a variation of said diameter of the cylindrical body (1) and/or a distance interposed between the lateral surface (4) of the cylindrical body (1) and the profile detector (700).

In a 5th aspect in accordance with the previous aspect, said at least one target surface profile geometric feature (TSP) includes at least one respective target altimetric parameter representative of a diameter of the cylindrical body (1) and/or a variation of said diameter of the cylindrical body (1) and/or a distance interposed, under an operating condition and subsequent to the removal procedure, between the lateral surface (4) of the cylindrical body (1) and the profile detector (700).

In a 6th aspect in accordance with any of the previous aspects, the control unit is configured to:

- move the profile detector (700) along the detection axis (Y);
- detect, while moving the profile detector (700) along the detection axis (Y), said surface profile (DSP) by means of the profile detector (700), and
- associate with said at least one geometric feature of the detected surface profile (DSP) of the cylindrical body (1) a respective linear position along the axis of detection (Y),

and optionally:

- move the cylindrical body (1) in rotation around the axis of rotation (K), specifically by means of an electric motor operationally connected to the cylindrical body, and
- detect the surface profile (DSP) using the profile detector (700) during the rotation of the cylindrical body;
- associate with said at least one geometric feature of the detected surface profile (DSP) of the cylindrical body (1) a respective angular position of the cylindrical body (1).

In a 7th aspect in accordance with any of the previous aspects, the control unit (15) is configured, during the removal procedure, to emit a pulsed laser beam,
in particular in which said pulses have:

- a duration between 100 fs and 1000 ns or between 1 fs and 1000 $\mu$s or between 1 ns and 1000 ns or between 1 fs and 1000 ps, and/or
- a peak power between 1 kW and 10 MW, specifically between 10 kW and 2 MW.

In an 8th aspect in accordance with any of the preceding aspects, said pulsed laser beam is configured to remove material from the cylindrical body (1), said removal stage generating a powder of said removed material, said material being metal, particularly steel.

In a 9th aspect in accordance with any of the previous aspects, the comparison between said detected surface profile (DSP) and said target surface profile (TSP) defines a differential profile parameter of the cylindrical body (1), said differential profile parameter being representative of a difference or ratio between said detected surface profile (DSP) and said target surface profile (TSP).

In a 10th aspect in accordance with any of the previous aspects, the control unit, during the removal procedure, is configured to modulate, according to said differential profile parameter, at least one working parameter of the apparatus.

In an 11th aspect in accordance with the previous aspect, the at least one working parameter of the apparatus includes at least one control parameter of the laser beam emitted by the laser emitter (600, 600"), said control parameter including at least one among an average power of the laser beam, a peak power of the laser beam, a duration of the laser beam pulses, a duration of the intervals between the laser beam pulses, a size of the laser beam, a distance between the laser emitter (600, 600") and the outer surface of the cylindrical body (1), a frequency of emission of the laser beam pulses.

In a 12th aspect in accordance the previous two aspects, said control unit is configured to modulate, depending on the differential parameter, a control parameter of the laser **beam emitted** by the laser emitter (600, 600") including a peak power of the laser beam, a pulse duration of the laser beam, and optionally an average power of the laser beam.

In a 13th aspect in accordance with any of the previous aspects from 10, the working parameter includes a laser emitter displacement speed (600, 600") along the main (Z) direction during a laser beam emission toward the outer surface of the cylindrical body (1).

In a 14th aspect in accordance with any of the previous aspects from 10, the working parameter includes an angular velocity of the cylindrical body (1) about its axis of rotation (K) during a laser beam emission toward the outer surface of the cylindrical body (1).

In a 15th aspect in accordance with any of the previous aspects from 10, the working parameter includes a number of passes in which the laser beam insists on the same portion of the lateral surface (4) of the cylindrical body (1)

In a 16th aspect in accordance with any of the preceding aspects from 10, the working parameter includes a time duration of exposure in which said laser beam insists on the same portion of the lateral surface (4) of the cylindrical body (1), in particular said time duration depending on said angular velocity of the cylindrical body (1) and said displacement velocity of the laser emitter (600, 600").

In a 17th aspect according to any of the previous aspects from 10, the working parameter includes an energy parameter representative of an energy emitted by the laser beam at the same portion of the lateral surface (4) of the cylindrical body (1),

in particular where said energy parameter depends on a combination of at least two in the group between:

- o said at least one laser emitter control parameter (600, 600"),
- o said displacement speed of the laser emitter (600, 600") along the main axis (Z),
- o said angular velocity of the cylindrical body (1) about its axis of rotation (K),
- o said time duration of exposure,
- o said number of passes.

In an 18th aspect in accordance with any of the previous aspects, the control unit is configured, as a value of said differential parameter increases, to:

- increase at least one of the laser emitter control parameter (600, 600"), the exposure time duration and the number of passes of the laser beam insisting on the same portion of the lateral surface (4), especially increase the peak power of the laser beam; and/or
- decrease at least one among the angular velocity of the cylindrical body (1), the displacement speed of the laser emitter (600, 600") along the main direction (Z) and the pulse duration of the laser beam.

In a 19th aspect in accordance with any of the previous aspects, the control unit is configured, as a value of said differential parameter decreases, to:

- reduce at least one of the laser emitter control parameter (600, 600"), the exposure time duration and the number of passes of the laser beam insisting on the same portion of the lateral surface (4), especially reduce the peak power of the laser beam; and/or
- increase at least one among the angular velocity of the cylindrical body (1), the displacement speed of the laser emitter (600, 600") along the main direction (Z) and the pulse duration of the laser beam.

In a 20th aspect in accordance with any of the preceding aspects, said differential parameter is variable according to the angular position of the cylindrical body (1) and/or along the axis of detection, in particular said differential parameter being variable only along the axis of detection (Y).

In a 21st aspect according to any of the previous aspects, said differential parameter is representative of wear of the surface profile of the cylindrical body (1).

In a 22nd aspect according to any of the previous aspects, said differential parameter is proportional to an amount of material to be removed interposed between the detected surface profile (DSP) and the target surface profile (TSP).

In a 23rd aspect in accordance with any of the previous aspects, the removal procedure includes:

- setting a predetermined laser emitter control parameter;
- optionally set an angular velocity of the cylindrical body (1) around the axis of rotation (K) and/or set a displacement velocity of the profile detector (700) along the detection axis (Y);
- determine or receive as input a removal index representative of a thickness of material removed from the lateral surface (4) of the cylindrical body (1) during a single pass of the laser beam;
- depending on the differential parameter of the profile and said removal index, calculate a number of passes of the laser emitter required to obtain said target surface profile (TSP), optionally said number of passes being calculated as the ratio of the differential parameter of the profile to said removal index, in particular said ratio being approximated by default to integer.

In a 24th aspect in accordance with any of the previous aspects, the step of determining the removal index depends on the control parameter setting of the laser emitter, the angular velocity of the cylindrical body (1), and optionally the displacement speed of the profile detector (700) along the detection axis (Y).

In a 25th aspect according to any of the previous aspects, the removal index increases and the number of laser passes required to obtain the target surface profile (TSP) decreases accordingly:

- as the peak power of the laser beam pulses increases,
- and optionally as the pulse duration of the laser beam decreases.

In a 26th aspect according to any of the previous aspects, the removal index decreases and the number of laser passes required to obtain the target surface profile (TSP) increases accordingly:

- as the peak power of the laser beam pulses decreases,
- and optionally as the pulse duration of the laser beam increases.

In a 27th aspect in accordance with any of the previous aspects, the target surface profile (TSP) defines a mean diameter of the cylindrical body (1) less than a respective mean diameter of the cylindrical body (1) defined by the detected surface profile (DSP).

In a 28th aspect in accordance with any of the previous aspects, the recovery procedure includes performing the detection procedure and the removal procedure iteratively in a loop to define a closed-loop control system, optionally in which such a loop defines an incremental number of laser beam passes at the same portion of the cylindrical body.

In a 28th bis aspect in accordance with the previous aspect, following a removal procedure, the restoration procedure includes an additional detection procedure to detect, by means of said profile detector (700), an updated detected surface profile (DSP) of the cylindrical body (1), said updated detected surface profile (DSP) being again compared with said target surface profile.

In a 29th aspect in accordance with any of the previous aspects, the step of detecting, by means of said profile detector (700), the outer profile of the cylindrical body (1) includes the steps of:

- angularly rotating the cylindrical body (1) about its axis of rotation (K), and
- moving the profile detector (700) along the detection axis (Y) to cover at least partially, especially entirely, a length of the outer surface of the cylindrical body (1), said length being measured parallel to the axis of rotation (K) of the cylindrical body (1),

particularly said steps of rotating and moving being performed in that order or in reverse order, or simultaneously.

In a 30th aspect in accordance with any of the previous aspects, the control unit, during the removal procedure, is configured to:

- rotate the cylindrical body (1);
- move the laser emitter along the main axis (Z);
- emit the laser beam through the laser emitter in the direction of the working site to remove metal material from the lateral surface (4) of the cylindrical body (1),

in which the steps of rotating the cylindrical body (1) and moving the laser emitter are performed in that order or in reverse order, or simultaneously, at full coverage of the surface profile of the cylindrical body (1).

In a 31st aspect in accordance with any of the previous aspects, the control unit is configured to perform the steps of rotating the cylindrical body (1) around its axis of rotation (K) and moving the profile detector (700) along the detection axis (Y) during the detection procedure and/or during the removal procedure in particular manner:

- sequential, in which the step of moving the profile detector (700) is after the step of rotating the cylindrical body (1) or vice versa, or
- simultaneous, in which the step of moving the profile detector (700) is simultaneous, in part or entirely, with the step of rotating the cylindrical body (1),

In a 32nd aspect in accordance with any of the previous aspects, the step of detecting the outer profile of the cylindrical body (1) includes performing the following steps sequentially and recursively in a loop in the following order or in reverse order:

- rotating the cylindrical body (1) about its axis of rotation (K) and simultaneously hold the profile detector (700) stationary with respect to the detection axis (Y); and
- rotationally stop the cylindrical body (1) and simultaneously moving the profile detector (700) along the detection axis (Y) by one or more feed steps.

In a 33rd aspect in accordance with any of the preceding aspects, said profile detector (700) is configured to detect a representative parameter of the profile of the cylindrical body (1) comprising at least one among:

EP 4 696 428 A2

- a diameter of the cylindrical body (1),
- a change in diameter of the cylindrical body (1),
- an interposed distance between said detector and said profile of the outer surface of the cylindrical body (1),

in which said representative parameter varies according to the outer profile of the cylindrical body (1),

in particular said representative parameter further varying with the rotation of the cylindrical body (1) and/or the position of the profile detector (700) along the detection axis (Y).

In a 34th aspect according to any of the previous aspects, said profile detector (700) includes:

- at least one gauge including one or more movable arms configured to contact, by means of a tip of said one or more movable arms, the lateral surface (4) of the cylindrical body (1), said movable arms being configured to detect the surface profile of the cylindrical body (1), or
- at least one non-contact distance detector configured to measure an interposed distance with the lateral surface (4) of the cylindrical body (1),
specifically said non-contact distance detector by including at least one between an optical detector, such as laser, and a time-of-flight detector.

In a 35th aspect in accordance with any of the preceding aspects, the removal procedure involves making at least one first and one second pass, optionally making "n" passes with 2≤n≤20, of the laser beam at one or more portions of interest of the lateral surface (4) of the cylindrical body (1) to remove a predetermined amount of material during each pass.
In a 36th aspect in accordance with the previous aspect, the control unit is configured to:

- command, temporally between said first and second passes, the profile detector (700) to detect an updated profile of the cylindrical body (1) at said portion of interest,
- compare said updated profile with the target surface profile (TSP);
- modulate the laser beam emitted by the laser emitter (600, 600") during the second pass according to said comparison between the updated profile and the target surface profile (TSP) and update the respective differential parameter, said modulation step being dependent on said updated differential parameter.

In a 37th aspect according to any of the previous aspects, said laser emitter control parameter includes at least one in the group between:

- an average power of the laser beam emitted by the laser emitter (600, 600"), said average power being modulable between a minimum power (Pmin) and a maximum power (Pmax), specifically said power being measured in watts; and
- a duration of one or more pulses of the laser beam, said laser pulse duration being modulable between a minimum duration (Tmin) of the laser pulse and a maximum duration (Tmax) of the laser pulse;
- a peak power of the laser beam pulses;
- a distance between the laser emitter (600, 600") and the outer surface of the cylindrical body (1), optionally a distance interposed between the laser emitter (600, 600") and the axis of rotation (K), wherein said laser emitter (600, 600") is movable transversely, in particular orthogonally, to the axis of rotation (K) along a calibration direction (X), in particular said calibration direction (X) intersecting the axis of rotation (K);
- a combination of all the previous control parameters.

In a 38th aspect according to any of the previous aspects, the exposure time duration essentially corresponds to the sum of the duration of each of the laser beam pulses emitted at the same portion of the outer surface of the cylindrical body (1).
In a 39th aspect according to any of the previous aspects, said energy parameter is proportional to the arithmetic product between the average power of the laser beam and the one time duration in which the laser beam acts on the same portion of the outer surface of the cylindrical body (1).
In a 40th aspect in accordance with any of the previous aspects, the control unit is configured to modulate at least one of the following working parameters:

- an average or peak power of the laser emitter (600, 600"), said average or peak power being modulable between a minimum power (Pmin) and a maximum power (Pmax), specifically said power being measured in watts;
- a laser beam pulse duration, said laser pulse duration being modulable between a minimum laser pulse duration

8

(Tmin) and a maximum laser pulse duration (Tmax),

in particular in which said control unit is configured to modulate both the laser emitter power (600, 600") and the duration of a laser beam pulse.

In a 41st aspect in accordance with any of the previous aspects, the control unit is configured to define, during the removal procedure, a roughing procedure including at least one among the steps of:

- command the laser emitter (600, 600") to generate a pulsed laser beam, each of said pulses having an initial time duration in particular within an order of magnitude between 1 ns and 1000 ns;
- optionally command the laser emitter (600, 600") to generate a laser beam having a size less than 50 $\mu$m, specifically less than 20 $\mu$m, said size being the beam diameter.

In a 42nd aspect in accordance with any of the preceding aspects, the control unit is configured to define, during the removal procedure, a semi-finishing procedure including at least one among the steps of:

- command the laser emitter (600, 600") to generate a pulsed laser beam, each of said pulses having a second time duration shorter than said first time duration,
  in particular said second time duration being at least 10, 100 or 1000 times less than said first time duration, said second time duration being in particular within an order of magnitude between 1 fs and 1000 ps, preferably less than 10 ps;
- optionally command the laser emitter (600, 600") to generate a laser beam having a size less than 50 $\mu$m, specifically less than 20 $\mu$m, said size being the beam diameter.

In a 43rd aspect in accordance with any of the previous aspects, the semi-finishing procedure is temporally subsequent to the roughing procedure.
In a 44th aspect in accordance with any of the preceding aspects from 41, the roughing procedure is configured to define on the lateral surface (4) of the cylindrical body (1) a first surface roughness, and in which the semi-finishing procedure is configured to define on the lateral surface (4) of the cylindrical body (1) a second surface roughness, said first surface roughness being greater than the second surface roughness, specifically said first surface roughness being "n" times greater than the second surface roughness with 1.1 <n<5.
In a 45th aspect according to any of the previous aspects,

- the average power of the laser emitter (600, 600") during the roughing procedure is substantially the same as the average power of the laser emitter (600, 600") during the semi-finishing procedure, said average power being in particular between 0.5 W and 500 W, in particular between 1 W and 200 W, and/or
- the peak power of the laser beam emitted by the laser emitter (600, 600") during the roughing procedure is lower than the peak power of the laser beam emitted by the laser emitter (600, 600") during the semi-finishing procedure, said peak power of the laser beam in the roughing procedure being 10, 100 or 1000 times lower than the peak power of the laser beam in the semi-finishing procedure.

In a 46th aspect in accordance with any of the previous aspects, the peak power of the laser beam in the roughing procedure is between 10 kW and 100 kW.
In a 47th aspect in accordance with any of the previous aspects, said peak power of the laser beam in the semi-finishing procedure is between 10 kW and 10 MW.
In a 48th aspect according to any of the previous aspects from 44,

- The first average surface roughness (Ra) is between 0.8 $\mu$m and 2.0 $\mu$m;
- The second average surface roughness (Ra) is between 0.2 $\mu$m and 0.8 $\mu$m.

**In a 49th** aspect in accordance with any of the previous aspects, said laser emitter is configured to emit, during the roughing and/or semi-finishing procedure, a laser beam having a wavelength between 0.3 $\mu$m and 1.5 $\mu$m.
In a 50th aspect in accordance with any of the previous aspects, the control unit is configured to define, during the removal procedure, a finishing procedure including at least one among the steps of:

- commanding the laser emitter (600, 600") to generate a laser beam of the type:

  o continuous, or
  o with pulses, said pulses having:

▪ a respective time duration greater than the time duration of the laser beam pulses emitted in the roughing procedure and/or the semi-finishing procedure, in particular said time duration of the pulses in the finishing procedure being within an order of magnitude between 1 μs and 1000 ms; and/or

▪ a respective peak power less than a peak power of the laser beam emitted in the roughing procedure and/or the semi-finishing procedure, in particular said peak power of the laser beam of the finishing procedure being 10, 100 or 1000 times less than a peak power of the laser beam emitted in the roughing procedure and the semi-finishing procedure,

- optionally commanding the laser emitter (600, 600") to generate a laser beam having a size, such as a diameter, greater than a respective size of the laser beam emitted during the roughing and/or semi-finishing procedure, in particular said size of the laser beam in the finishing procedure being greater than 100 μm, in particular greater than 200 μm, said size being in particular between 50 μm and 2000 μm, said size being the diameter of the beam.

In a 51st aspect in accordance with any of the previous aspects, the finishing procedure is configured to define on the lateral surface (4) of the cylindrical body (1) an average surface roughness (Ra) of finishing less than 0.5 μm, specifically less than 0.4 μm, specifically between 0.05 μm and 0.4 μm.

In a 52nd aspect in accordance with any of the previous aspects, said laser emitter is configured to modulate, during the finishing procedure, an average laser beam power between 1 W and 2 kW, more particularly between 10 W and 1 kW, more particularly between 20 W and 800 W, more particularly between 50 W and 500 W.

In a 52nd bis aspect in accordance with any of the preceding aspects, said laser emitter is configured to modulate, during the finishing procedure, a peak laser beam power between 8 W and 2 kW, more particularly between 10 W and 1 kW, more particularly between 20 W and 800 W, more particularly between 50 W and 500 W.

In a 53rd aspect according to any of the previous aspects, the average power of the laser beam emitted by the laser emitter (600, 600") during the finishing procedure is greater than the average power of the laser beam emitted by the laser emitter (600, 600") during the roughing procedure.

In a 54th aspect according to any of the previous aspects,

- during the roughing procedure, the laser emitter is configured to emit a laser beam having an initial peak power $Pr\_p$;
- during the semi-finishing procedure, the laser emitter is configured to emit a laser beam having a second peak power $Ps\_p$;
- during the finishing procedure, the laser emitter is configured to emit a laser beam having a peak finishing power $Pf\_p$;

such that:

$$Pf\_p < \mathrm{Pr}\_p \leq Ps\_p$$

In a 55th aspect in accordance with any of the preceding aspects, said laser emitter is configured to remove, during the roughing procedure, a greater thickness of material for each major pass than a thickness of material removed during the finishing or semi-finishing procedure.

In a 56th aspect in accordance with any of the previous aspects, during the roughing procedure the laser emitter is configured to remove, during each pass, a material thickness between 0.001 mm and 0.250 mm, specifically between 0.010 and 0.100 mm, from the lateral surface (4) of the cylindrical body (1).

In a 57th aspect in accordance with any of the preceding aspects, said laser emitter is configured to remove, during the removal procedure, a thickness of material from the lateral surface (4) of the cylindrical body (1) greater than a maximum difference between the detected surface profile (DSP) and the target surface profile (TSP), in particular greater than the maximum value of the differential parameter.

In a 58th aspect according to the previous aspect, said thickness is measured radially between a condition before the removal procedure and a condition after the removal procedure.

In a 59th aspect in accordance with any of the preceding aspects, the laser emitter (600, 600") is configured to emit said laser beam, during an operating condition, along an emission direction incident with a working portion of the lateral surface (4) of the cylindrical body (1), said laser beam emission direction (LD) being substantially orthogonal or transverse to the axis of rotation (K) of the cylindrical body (1).

In a 60th aspect in accordance with any of the preceding aspects, the apparatus includes a gas nozzle (610) configured to deliver a flow of gas in the direction of a portion of the lateral surface (4) of the cylindrical body (1) affected by the laser beam, optionally said lateral surface portion (4) being the working portion of the lateral surface (4) of the cylindrical body (1).

In a 61st aspect in accordance with any of the preceding aspects, said gas nozzle (610) is configured to deliver at least one of:

- a nonoxidizing gas, particularly an inert gas, particularly said nonoxidizing gas including at least one in the group between nitrogen, helium, and argon; and
- a reactive gas configured to interact with the lateral surface (4) of the cylindrical body (1) to bring about chemical changes in said portion of the lateral surface (4) of the cylindrical body (1) affected by the laser beam, said reactive gas comprising at least one of oxygen or air.

In a 62nd aspect in accordance with any one of the preceding aspects, said gas nozzle (610) is configured to deliver said gas along a gas emission direction (GD) transverse to a laser beam emission direction (LD), said gas emission direction (GD) and said laser beam emission direction (LD) meeting at a working point, in particular wherein said working point being substantially coincident with said portion of the lateral surface (4) of the cylindrical body (1) affected by the laser beam.

In a 63rd aspect in accordance with any of the previous aspects, said gas flow is configured to move metal particles away from the working portion of the lateral surface (4) of the cylindrical body (1) in which the laser beam insists.

In a 63rd bis aspect in accordance with any of the preceding aspects, the apparatus includes, particularly in accordance with a first configuration, a system of deflection mirrors suitable for bringing, by successive reflections, the laser beam generated by the laser source (601) to said laser emitter.

In a 64th aspect in accordance with any of the preceding aspects, the apparatus includes, in accordance with a second configuration, a first and a second laser source each connected by a respective cable, especially a fiber optic cable, to said laser emitter, in particular the cable of the first source and the cable of the second laser source converging into the same laser emitter,

in which said first laser source is configured to originate a first laser beam;

and in which said second laser source is configured to originate a second laser beam.

In a 64a aspect in accordance with any of the preceding aspects, the apparatus comprises, in accordance with a second configuration, a first and a second laser source each connected by a respective system of deflection mirrors suitable for carrying, by successive reflections, the laser beam generated by the sources to said laser emitter,

in which said first laser source is configured to originate a first laser beam;

and in which said second laser source is configured to originate a second laser beam.

In a 65th aspect according to the previous two aspects, said first laser beam includes at least one control parameter or wavelength different from said second laser beam.

In a 66th aspect in accordance with any of the previous aspects from 64, the control unit is configured to selectively activate the first or second laser source to emit the respective laser beam to the laser emitter.

In a 67th aspect in accordance with any of the preceding aspects, the apparatus includes, in accordance with a third configuration, said laser emitter and an auxiliary laser emitter distinct from each other and located in different positions from each other.

In a 68th aspect in accordance the previous aspect, the apparatus further includes:

- a first laser source connected by a respective first cable, specifically a fiber optic cable, to said laser emitter, and
- a second laser source connected by a respective second cable, specifically a fiber optic cable, to said auxiliary laser emitter,

in which said first laser source is configured to originate a first laser beam,
and in which said second laser source is configured to originate a second laser beam;
in which the laser emitter is configured to emit the first laser beam along a first emission direction, while the auxiliary laser emitter is configured to emit the second laser beam along a second emission direction optionally different from the first emission direction, particularly in which said first emission direction and said second emission direction intersect different areas of the operating site or, during an operating condition, different portions of the lateral surface (4) of the cylindrical body (1).

In a 68th bis aspect in accordance with the 67th aspect, the apparatus further includes:

- A first laser source connected to said laser emitter by a respective first system of deflection mirrors suitable for bringing, by successive reflections, the laser beam generated by the source to said laser emitter, and

- a second laser source connected to said auxiliary laser emitter by a respective second system of deflection mirrors suitable for bringing, by successive reflections, the laser beam generated by the source to said auxiliary laser emitter,

in which said first laser source is configured to originate a first laser beam,

and in which said second laser source is configured to originate a second laser beam; particularly in which the laser emitter is configured to emit the first laser beam along a first emission direction, while the auxiliary laser emitter is configured to emit the second laser beam along a second emission direction optionally different from the first emission direction, particularly in which said first emission direction and said second emission direction intersect different areas of the operating site or, during an operating condition, different portions of the lateral surface (4) of the cylindrical body (1).

In a 69th aspect in accordance with any of the previous aspects from 67, the control unit is configured to simultaneously or selectively activate the first and second laser sources to emit the respective laser beam.

In a 70th aspect according to any of the previous aspects from 67:

- said first laser beam includes at least one control parameter or wavelength different from said second laser beam, wherein the control unit is configured to simultaneously or selectively activate the first and second laser sources to emit the respective laser beam,

or

- said first laser beam and said second laser beam have the same wavelength or have equal control parameter values, especially equal peak power and pulse duration, and in which the control unit is configured to simultaneously or selectively activate the first and second laser sources to emit the respective laser beam.

In a 71st aspect in accordance with any of the preceding aspects from 67, the apparatus comprises a common laser carriage movable along the main axis (Z) and carrying the laser emitter and the auxiliary laser emitter, such that the laser emitter is integral, at least along the main axis (Z), to the auxiliary laser emitter.

In a 72nd aspect in accordance with any of the previous aspects 67 to 70, the apparatus includes, in accordance with a fourth configuration, a first and a second laser carriage (400, 400") respectively carrying the laser emitter (600) and the auxiliary laser emitter (600"), in which:

- the first carriage is movable along the main axis (Z), and
- the second carriage is movable along an auxiliary main axis (X') essentially parallel to the axis of rotation (K) and distinct from said main direction (Z),

in particular in which said first direction (X) and said first auxiliary direction (X') are angularly out of phase with each other with respect to the axis of rotation (K) by an angle $\alpha$.

In a 73rd aspect in accordance with the previous aspect, said first carriage and said second carriage are movable independently of each other.

In a 74th aspect in accordance with any of the previous aspects, said apparatus includes:

- a detector carriage carrying the profile detector (700) and movable at least along the axis of detection (Y), and
- a laser carriage carrying the laser emitter (600, 600") and movable at least along the main axis (Z);

**in which** said detector carriage and said laser carriage are physically distinct and independently movable from each other, and in particular in which the main axis (Z) and the detection axis (Y) are:

- distinct and parallel to each other, particularly the principal axis (Z) and the detection axis (Y) not being coincident, optionally where the principal axis (Z) and the detection axis (Y) are angularly offset from each other with respect to the axis of rotation (K), or
- coincident with each other;
  or
- said apparatus includes:

  o a common carriage carrying both the profile detector (700) and the laser emitter (600, 600") and moving along a working direction (W) substantially parallel to the axis of rotation (K) of the cylindrical body (1), said profile detector (700) and said laser emitter (600, 600") being integral with each other at least along the working direction (W), in particular such that a movement of the profile detector (700) along the detection axis (Y) results in the same movement of the laser emitter (600, 600") along the main axis (Z),
particularly where the main axis (Z) is basically coincident with the detection axis (Y) and the working direction (W).

In a 75th aspect in accordance with any of the preceding aspects, the apparatus comprises the detector carriage, the laser carriage, and a common rail carrying said detector carriage and laser carriage, said common rail extending parallel to the axis of rotation (K) of the workstation and in which the detector carriage and laser carriage are movable on said rail, particularly in which said main direction and said detection direction are substantially coincident.

In a 76th aspect in accordance with any of the preceding aspects, the apparatus comprises the common carriage and a common rail carrying said common carriage, said common rail extending parallel to the axis of rotation (K) of the workstation, the common carriage being movable along said rail, particularly wherein said main direction and said detection direction are substantially coincident.

In a 77th aspect in accordance with any of the previous aspects, the apparatus includes a first rail and a second rail, in which:

- the first rail extends parallel to the axis of rotation (K) of the workstation and carries said detection carriage and said long laser carriage,
- the second rail extends parallel to the axis of rotation (K) of the workstation and carries said auxiliary laser carriage along the main auxiliary axis (X'),

optionally in which said first and second rails are arranged on opposite sides of the operating site of the work area, particularly in which said first and second rails are angularly offset or opposite to each other with respect to the axis of rotation (K).

In a 78th aspect in accordance with any of the preceding aspects, the profile detector (700) is further configured to detect surface defects of the lateral surface (4) of the cylindrical body (1), said surface defects comprising in particular cracks, by induction of eddy currents and/or ultrasound, in particular wherein said profile detector (700) being configured to detect one or more information in the group among position, shape, size and depth of said surface defects.

In a 79th aspect in accordance with any of the preceding aspects, the laser emitter (600, 600") is configured to generate a laser beam having a wavelength between 2 $\mu$m and 0.2 $\mu$m, specifically between 1.2 $\mu$m and 0.25 $\mu$m, more specifically between 1.1 $\mu$m and 0.3 $\mu$m or between 1.1 $\mu$m and 0.5 $\mu$m.

In an 80th aspect in accordance with any of the previous aspects, the laser emitter (600, 600") is configured to emit a class 4 laser beam.

In an 81st aspect in accordance with any of the preceding aspects, the apparatus includes a shielding cover (1000) defining an internal volume housing at least the workstation and the laser emitter, optionally also the profile detector (700), said shielding cover (1000) being configured to confine the laser beam within said internal volume preventing it from escaping.

In an 82nd aspect in accordance with any of the preceding aspects, the inner volume of said shielding cover (1000) is in communication with the external environment substantially only through a filter device configured to prevent the escape of metal dust, generated by the removal procedure, from the inner volume to the surrounding environment.

In an 83rd aspect in accordance with any of the preceding aspects, the workstation includes at least one motor or actuator, such as an electric motor or actuator, configured to place the cylindrical body (1) in rotation and operatively connected to the control unit, the control unit being configured to control said motor to vary the speed of rotation of the cylindrical body (1) during the sensing procedure and/or during the removal procedure.

In an 84th aspect in accordance with any of the preceding aspects, the workstation includes at least one motor or actuator, such as an electric motor or actuator, configured to move the common carriage.

In an 85th aspect in accordance with any of the preceding aspects, the workstation includes at least one motor or actuator, such as an electric motor or actuator, configured to move the first carriage.

In an 86th aspect in accordance with any of the preceding aspects, the workstation includes at least one motor or actuator, such as an electric motor or actuator, configured to move the second carriage.

In an 87th aspect in accordance with any of the previous aspects, the workstation includes at least one motor or actuator, such as a motor or electric actuator, configured to move the profile detector.

In an 88th aspect in accordance with any of the preceding aspects, the control unit is configured to perform the detection procedure simultaneously with the removal procedure, and in which, during the restoration procedure, the laser emitter (600, 600") is adapted to emit the laser beam at a first portion of the lateral surface (4) of the cylindrical body, the profile detector being configured to detect the surface profile at a second portion of the lateral surface (4) of the cylindrical body, said first portion being distinct and separate from said second portion.

In an 89th aspect in accordance with any of the preceding aspects, the laser emitter is a solid-state laser emitter comprising at least one in the group between:

- disk laser emitter;
- Fiber laser emitter;
- Nd:YAG laser emitter;
- Yb:YAG laser emitter;
- Nd:YVO4 laser emitter;
- diode laser emitter;
- Ti-zapphire laser emitter.

In a 90th aspect in accordance with any of the previous aspects, the cylindrical body (1), especially at least the lateral surface (4) of the cylindrical body (1), is made of metallic material, especially steel.

In a 91st aspect in accordance with any of the previous aspects, the cylindrical body (1) has a side working surface dimension in length along the axis of rotation (K) between 500 mm and 2500 mm, and a diameter between 50 mm and 1500 mm.

In a 92nd aspect in accordance with any of the previous aspects, the control unit is configured to calculate the target surface profile (TSP) according to the detected surface profile (DSP), such that if the target surface profile (TSP) intersects the detected surface profile (DSP), the control unit is configured to calculate a new target surface profile (TSP) that does not intersect the detected surface profile (DSP), particularly where the new target surface profile (TSP) defines a smaller cylindrical body diameter than a diameter defined by the target surface profile (TSP) intersecting the detected surface profile (DSP).

In a 92nd bis aspect in accordance with any of the previous aspects, the control unit is configured to:

- detect, on a first portion of the lateral surface (4) of the cylindrical body, a temporary detected surface profile ($DSP_{temp}$);
- calculate a temporary target surface profile ($TSP_{temp}$) according to the temporary detected surface profile ($DSP_{temp}$), said temporary target surface profile ($TSP_{temp}$) not intersecting said temporary detected surface profile ($DSP_{temp}$);
- detect, on a second portion of the lateral surface (4) of the cylindrical body, an updated detected surface profile (DSP);
- if said temporary target surface profile ($TSP_{temp}$) intersects said updated detected surface profile (DSP), calculate an updated target surface profile (TSP) according to the updated detected surface profile (DSP), said updated target surface profile (TSP) not intersecting said updated detected surface profile (DSP).

In a 93rd aspect in accordance with any of the previous aspects, the control unit is configured to emit a pulsed laser beam having a peak power greater than the relative average power, specifically said peak power being 10, 100 or 1000 times greater than the relative average power.

In a 94th aspect in accordance with any of the previous aspects, the step of detecting the surface profile of the lateral surface (4) of the cylindrical body (1) includes the following steps:

- keeping the cylindrical body (1) fixed in an angular position;
- moving the profile detector (700) along the detection axis (Y) while the cylindrical body is fixed in said angular position, said profile detector (700) simultaneously detecting a surface profile of a portion of said lateral surface (4) of the cylindrical body (1) while moving along the detection axis (Y);
- positioning and securing the profile detector (700) at a predefined detection position along the detection axis (Y);
- moving the cylindrical body (1) in rotation about its axis of rotation (K) and detect, while the profile detector (700) is in said predefined detection position, a surface profile of an additional portion of said lateral surface (4) of the cylindrical body (1).

In a 95th aspect in accordance with the previous aspect, said default detection position includes:

- a first extremal position in which the profile detector (700) faces a first extreme of the lateral surface of the cylindrical body (1);
- a second extreme position in which the profile detector (700) faces a second extreme, opposite to the first extreme along the direction defined by the axis of rotation (K), of the lateral surface of the cylindrical body (1);
- an intermediate position in which the profile detector (700) faces a central portion, specifically interposed centrally between said first and second ends, of the lateral surface of the cylindrical body (1).

In a 96th aspect in accordance with any of the previous aspects, the lateral surface (4) of the cylindrical body (1) is configured to carry out the rolling operations during an operational condition of the cylindrical body.

In a 97th aspect in accordance with any of the previous aspects, the lateral surface (4) of the cylindrical body (1) defines the maximum diameter of the cylindrical body (1).

In a 98th aspect in accordance with any of the preceding aspects, said target surface profile (TSP) includes a required machining tolerance, said machining tolerance specifically including a tolerance range:

- equal to $\pm$ 30 $\mu$m measured over the diameter of the cylindrical body if the cylindrical body is configured to perform hot rolling operations (HSM), or
- between $\pm$ 10 $\mu$m and $\pm$ 15 $\mu$m measured over the diameter of the cylindrical body if the cylindrical body is configured to perform cold rolling operations (CRM).

In a 99th aspect in accordance with any of the previous aspects, the control unit is configured to calculate a deviation value representative of a difference between the detected surface profile (DSP), specifically between the updated detected surface profile (DSP), and the target surface profile (TSP),

and in which:

- if said deviation value is within a predetermined tolerance range, the control unit is configured to terminate the restoration procedure;
- if said deviation value is outside said predetermined tolerance range, the control unit is configured to continue performing the restoration procedure,

in particular where said tolerance interval being:

- equal to $\pm$ 30 $\mu$m measured over the diameter of the cylindrical body if the cylindrical body is configured to perform hot rolling operations (HSM), or
- between $\pm$ 10 $\mu$m and $\pm$ 15 $\mu$m measured over the diameter of the cylindrical body if the cylindrical body is configured to perform cold rolling operations (CRM).

In a 100th aspect in accordance with any of the preceding aspects, the apparatus includes a system of reflective mirrors interposed between the laser source(s) and the respective laser emitter, said mirror system being configured to guide the laser beam emitted by the laser source to the respective laser emitter,
the laser source being configured to emit a pulsed laser beam having durations of less than 100 fs, specifically between 0.1 fs and 100 fs, specifically between 1 fs and 50 fs.

In a 101st aspect in accordance with any of the previous aspects, the removal procedure defines a cylindrical body grinding procedure (1).

In a 102nd aspect in accordance with any of the previous aspects, the control unit (15) is configured, during the removal procedure (2002), to command the at least one laser emitter (600, 600") to emit a pulsed laser beam suitable for removing material from the cylindrical body (1).

In a 103rd aspect according to the previous aspect, the removal procedure (2002) includes:

- moving (2002a) at least one between said cylindrical body (1) and said at least one laser emitter (600, 600"), optionally place the cylindrical body (1) in rotation around its axis of rotation (K), and
- commanding the at least one laser emitter (600, 600") to emit (2002b) said pulsed laser beam, said pulses being capable of removing material from the cylindrical body (1).

In a 104th aspect according to the preceding aspect, the step of moving at least one between said cylindrical body (1) and said at least one laser emitter (600, 600") and said step of commanding the at least one laser emitter (600, 600") to emit (2002b) a pulsed laser beam are substantially simultaneous with each other.

In a 105th aspect according to any of the preceding aspects from 102, said pulses of the laser beam are temporally staggered with each other.

In a 106th aspect in accordance with any of the preceding aspects from 102, each pulse directed toward the lateral surface (4) of the cylindrical body (1) is configured to define, on said lateral surface (4) of the cylindrical body (1) during said operating condition of the apparatus, a respective laser footprint (40).

In a 107th aspect according to the previous aspect, said laser pulses define laser footprints at least partially overlapping each other by forming respective overlapping portions (41) between said laser footprints.

In a 108th method aspect in accordance with any of the previous aspects, the removal procedure (2002) includes:

- moving (2002a) at least one between said cylindrical body (1) and said at least one laser emitter (600, 600"), optionally place the cylindrical body (1) in rotation around its axis of rotation (K), and

- commanding the at least one laser emitter (600, 600") to emit (2002b) a pulsed laser beam, said laser pulses removing material from the cylindrical body (1), said laser beam pulses being temporally staggered with each other,

particularly in which said step of moving at least one between said cylindrical body (1) and said at least one laser emitter (600, 600") and said step of commanding the at least **one laser** emitter (600, 600") to emit a pulsed laser beam are substantially simultaneous with each other.

In a 109th aspect according to the previous aspect, each pulse directed toward the lateral surface (4) of the cylindrical body (1) defines, on said lateral surface (4) of the cylindrical body (1), a respective laser footprint, said laser pulses defining (2002c) laser footprints (40) at least in partial overlap with each other by forming respective overlapping portions (41) between said laser footprints.

An aspect 110 is directed to an apparatus (10) for surface processing of cylindrical bodies (1), particularly for surface restoration of rolling cylinders, said apparatus comprising:

- a workstation (100) defining at least one operating location arranged to receive, in an apparatus operating condition (10), a cylindrical body (1) having a lateral surface (4), said workstation (100) being configured to rotationally support the cylindrical body (1) according to a predetermined axis of rotation (K),
- at least one laser emitter (600, 600") cooperating with the workstation (100) and configured to emit at least one pulsed laser beam in the direction of said operating site, said laser emitter (600, 600") being movable at least along a main axis (Z) substantially parallel to the axis of rotation (K) of the cylindrical body (1),
- a control unit (15) operatively connected with the laser emitter (600, 600") and configured to perform, during said operating condition of the apparatus (1), at least one restoration procedure (2000) of the lateral surface (4) of the cylindrical body (1),

said restoration procedure (2000) including a removal procedure (2002) including at least the following steps:

o moving (2002a) at least one between the cylindrical body (1) and said at least one laser emitter (600, 600"),

o commanding the at least one laser emitter (600, 600") to emit (2002b) said pulsed laser beam, said pulses being capable of removing material from the cylindrical body (1),

said pulses of the laser beam are temporally staggered with each other,
each pulse directed toward the lateral surface (4) of the cylindrical body (1) is configured to define, on said lateral surface (4) of the cylindrical body (1) during said operating condition of the apparatus, a respective laser footprint (40), said laser pulses define laser footprints (40) at least in partial overlap with each other by forming respective overlapping portions (41) between said laser footprints.

An aspect 111 is directed to a method for surface restoration of a cylindrical body (1) comprising a step of performing a procedure of removing (2002) material from the cylindrical body, said removal procedure (2002) comprising a step of emitting (2002b) consecutive laser pulses to each other toward the lateral surface (4) of the cylindrical body (1), wherein each laser pulse defines (2002c), on said lateral surface (4) of the cylindrical body (1), a respective laser footprint, said laser pulses defining laser footprints (40) at least partially overlapping each other by forming respective overlapping portions (41) between said laser footprints.

In a 112th aspect according to the previous 111 aspect, the restoration method is performed by an apparatus (10) according to any of the previous aspects.

In a 113th aspect according to any of the preceding aspects from 111, the step of moving at least one between said cylindrical body (1) and said at least one laser emitter (600, 600") and said step of commanding the at least one laser emitter (600, 600") to emit (2002b) a pulsed laser beam are substantially simultaneous with each other.

In a 114th aspect according to any of the preceding aspects from 107, the overlapping portion (41) extends by a surface extent between 10% and 90%, optionally between 25% and 75%, of a surface extent of the laser footprint (40), optionally said surface extent of the overlapping portion (41) being between 50% and 75% or between 25% and 50%.

In a 115th aspect according to any of the previous aspects from 102, said laser beam pulses are temporally staggered with each other to define a pulse frequency optionally between 10 kHz and 10000 kHz, more specifically between 10 kHz and 1500 kHz.

In a 116th aspect according to any of the previous aspects from 106, said laser footprint (40) defines an area, and its boundaries, of material removal from the cylindrical body (1). **In** a 117th aspect according to any of the previous aspects from 102, the step of moving at least one between the cylindrical body (1) and said at least one laser emitter (600, 600") includes a step of rotating the cylindrical body (1) around its axis of rotation (K).

In a 118th aspect according to any of the preceding aspects from 107, overlapping portions are defined by the at least partial overlap of consecutive laser footprints with each other, particularly immediately consecutive with each other.

In a 119th aspect according to any of the previous aspects from 107, said overlapping portion is defined by the overlap of a first laser print with a second laser print immediately consecutive temporally to said first laser print.

In a 120th aspect according to the previous aspect, said second laser footprint being defined with a time delay from the first laser footprint equal to the inverse of said pulse frequency.

In a 121st aspect according to any of the previous 119 and 120 aspects, the control unit (15) is configured, during the removal procedure, to:

- commanding the rotation of the cylindrical body (1) around the axis of rotation (K) at a predefined speed;
- commanding the at least one laser emitter (600, 600") to emit a first laser pulse to define said first laser imprint on the cylindrical body;
- commanding the at least one laser emitter (600, 600") to emit a second laser pulse to define said second laser imprint on the cylindrical body, said second laser imprint being partially superimposed on said first laser imprint,

   in which the second laser pulse is immediately temporally consecutive to said first laser pulse,

   particularly in which the second laser pulse is emitted with a time delay, relative to the first laser pulse, equal to the inverse of said laser pulse frequency.

In a 122nd aspect according to any of the previous aspects from 119, the control unit (15) is configured, during the removal procedure (2002), to:

- command the at least one laser emitter (600, 600") to emit a third laser pulse, temporally subsequent to said first laser pulse and to said second laser pulse, to define a third laser imprint on the cylindrical body partially overlapping said second laser imprint and external or tangent to said first laser imprint,
   or

- command the at least one laser emitter (600, 600") to emit a third laser pulse, temporally subsequent to said first laser pulse and said second laser pulse, to define a third laser imprint on the cylindrical body partially overlapping said second laser imprint and said first laser imprint.

In a 123rd aspect according to the previous aspect, the third laser pulse is immediately consecutive temporally to said second laser pulse.

In a 124th aspect according to any of the previous 122 and 123 aspects, the third laser pulse is emitted with a time delay relative to the second laser pulse equal to the inverse of said pulse frequency.

In a 125th aspect according to any of the preceding aspects from 1, the apparatus includes an oscillation system configured to determine a spatial oscillation of the direction of the laser beam emitted by the at least one laser emitter (600, 600") at an oscillation frequency.

In a 126th aspect according to the previous aspect, said oscillation frequency is between 10 Hz and 20000 Hz, specifically between 100 Hz and 10000 Hz, more specifically between 200 Hz and 5000 Hz, more specifically between 200 Hz and 2000 Hz.

In a 127th aspect according to any of the previous aspects from 125, said laser beam is a pulsed laser beam.

In a 128th aspect according to any of the preceding aspects from 125, said spatial oscillation defines an amplitude of oscillation of the laser beam at the lateral surface (4) of the cylindrical body (1) optionally between 0.05 mm and 5 mm, specifically between 0.1 mm and 2 mm.

In a 129th aspect according to any of the previous aspects from 125, the control unit (15) is configured to activate, during the removal procedure (2002), said oscillation system to determine a spatial oscillation of the laser beam direction.

In a 130th aspect according to any of the previous aspects from 125, the removal procedure includes performing the following steps substantially simultaneously with each other:

- moving the cylindrical body (1) in rotation,
- determining a spatial oscillation of the laser beam direction by the oscillation system;
- commanding the at least one laser emitter (600, 600") to emit laser pulses.

In a 131st aspect according to any of the preceding aspects from 125, the control unit (15) is configured to determine the oscillation frequency of the oscillation system as a function of a rotational speed of the cylindrical body or vice versa.

In a 132nd aspect according to any of the preceding aspects from 125, the apparatus includes a rotational speed detector configured to detect a rotational speed of the cylindrical body (1), and in which the control unit (15) is configured to:

- determine the oscillation frequency of the oscillation system as a function of said rotational speed of the cylindrical body detected by the speed detector,

or

- determine a rotational speed of the cylindrical body as a function of an oscillation frequency of the oscillation system.

In a 133rd aspect according to any of the previous aspects from 125, the control unit (15) is configured to:

- increase the oscillation frequency of the swing system as the rotation speed of the cylindrical body increases; and
- decrease the oscillation frequency of the oscillation system as the rotation speed of the cylindrical body decreases.

In a 134th aspect according to any of the previous aspects from 125, the spatial oscillation of the laser beam direction determined by the oscillation system defines a movement of the laser beam along a predefined trajectory.

In a 135th aspect according to the previous aspect, said default trajectory includes at least one among a circular trajectory, a straight trajectory, a curved trajectory, and an elliptical trajectory.

In a 136th aspect according to any of the preceding aspects from 125, the oscillation system is configured to move the laser beam along a direction of oscillation substantially parallel to the axis of rotation (K) of the cylindrical body 1, specifically to define an amplitude of oscillation (L) of the laser beam at the lateral surface (4) of the cylindrical body (1) substantially parallel to the esse of rotation (K) of the cylindrical body (1).

In a 137th aspect according to any of the preceding aspects from 125, to obtain overlapping portions (41) between laser footprints, the control unit (15) is configured to determine the oscillation frequency of the oscillation system as a function of at least one between:

- of a representative parameter (D) of one dimension of said laser footprints (40),
- of a frequency ($f_{pulse}$) of laser pulses;
- of an oscillation amplitude (L) of the laser pulses at the lateral surface (4) of the cylindrical body (1).

In a 138th aspect according to any of the previous aspects from 125, the control unit (15) is configured to:

- decrease the oscillation frequency as the representative parameter (D) of the size of said laser footprints (40) decreases,
- optionally increase the oscillation frequency as the representative parameter (D) of the size of said laser footprints increases (40).

In a 139th aspect according to any of the preceding aspects from 125, the control unit (15) is configured to determine the oscillation frequency of the oscillation system in accordance with the following formula to obtain overlapping portions (41) between the laser footprints (40):

$$f_{osc} < \frac{D}{T \cdot L}$$

where:

- $\mathbf{f_{osc}}$ is the oscillation frequency of the laser beam that may be determined by the oscillation system, said oscillation frequency being specifically expressed in Hz;
- $\mathbf{D}$ is a representative parameter of the size of said laser footprints (40), said representative parameter D being specifically a linear dimension for example expressed in mm, optionally said representative parameter D being a diameter of said laser footprints (40);
- $\mathbf{T}$ is the time interval between two laser pulses, specifically said time interval being the inverse of the pulse frequency $f_{osc}$ of the laser beam, e.g. said time interval being expressed in seconds;
- $\mathbf{L}$ is the amplitude of oscillation of the laser beam at the lateral surface (4) of the cylindrical body (1), said amplitude of oscillation of the laser beam being in particular a linear dimension e.g. expressed in mm, in particular where the amplitude of oscillation L is between 0.05 mm and 5 mm, more particularly between 0.1 mm and 2 mm.

In a 140th aspect according to any of the previous 1 and/or 110 aspects, the at least one laser emitter (600, 600") is configured to direct the laser beam to a focus point, said focus point defining a minimum spatial dimension of the laser beam, specifically where laser beam defining beams converge to said focus point.

In a 141st aspect according to the previous aspect, the at least one laser emitter (600, 600") is configured to define said focus point at a blurring distance ($\Delta f$) relative to a reference plane defined, during an operating condition of the apparatus, by the lateral surface (4) of the cylindrical body (1).

In a 142nd aspect according to the previous aspect, said blurring distance ($\Delta f$) is a non-zero value.

In a 143rd aspect according to any of the preceding aspects from 141, said blurring distance ($\Delta f$) is between 0.01 mm and 2 mm in absolute value, specifically between 0.1 mm and 1 mm, more specifically between 0.1 mm and 0.5 mm.

In a 144th aspect according to any of the previous aspects from 141, the at least one laser emitter (600, 600") is configured to vary said blurring distance ($\Delta f$) between:

- a positive value of said blurring distance ($\Delta f$) where the focus point is outside the cylindrical body, and
- a negative value of said blurring distance ($\Delta f$) where the focus point is inside the cylindrical body.

In a 145th aspect according to any of the previous aspects from 102, the frequency of the laser pulses is greater than the rotation frequency of the cylindrical body (1), optionally where said rotation frequency of the cylindrical body is defined as a number of complete rotations of the cylindrical body (1) around its axis of rotation (K) per second.

In a 146th aspect according to any of the preceding aspects from 102, the frequency of the laser pulses is at least "n" times greater than the frequency of rotation of the cylindrical body (1), where n>100, specifically n>500, more specifically n>1000, even more specifically n>3600.

In a 147th aspect according to any of the previous aspects from 102, the rotation frequency of the cylindrical body (1) is between 5 RPM and 250 RPM, optionally between 20 RPM and 100 RPM.

In a 148th aspect according to any of the previous aspects from 102, the control unit (15), depending on a desired surface extent of the overlapping portion, is configured to:

- **calculate** and command the frequency of laser beam pulses, and
- calculate and command a rotational speed or frequency of rotation of the cylindrical body (1).

In a 149th aspect according to any of the previous aspects from 102, the control unit (15), during the removal procedure (2002), is configured to:

- receive as input or calculate a desired surface extent of the overlapping portion;
- according to the desired surface extent of the overlapping portion (41), calculate:

  o said pulse frequency of the laser beam,
  o said rotational speed or rotational frequency of the cylindrical body (1),

- perform the restoration procedure (2000), especially the removal procedure (2002), by setting said laser beam pulse frequency and said rotation speed of the cylindrical body.

In a 150th aspect according to any of the previous aspects from 106, said laser footprint (40) presents a shape in the group between circular, elongated circular, elliptical, curvilinear having convex contour.

In a 151st aspect according to any of the previous aspects from 106, the control unit (15) is configured to set a shape of the laser footprint among said laser footprints by changing at least one among:

- a laser beam pulse duration defining said laser footprint,
- a rotation speed of the cylindrical body around the axis of rotation (K) during the emission of said laser pulse,
- a frequency of oscillation of the laser beam;
- optionally a shape of the laser beam.

In a 152nd aspect according to any of the previous aspects from 107, the control unit (15), during the removal procedure (2002), is configured to:

- receive as input a desired surface extent of the overlapping portion or a ratio of a surface extent of the overlapping portion (41) to a surface extent of the laser footprint (40), and
- according to said desired surface extent of the overlapping portion or said ratio, calculate at least one among:

  o apeak power;

o an average power of the laser beam pulses,
o a rotation speed of the cylindrical body, a frequency of the laser pulses;

or

- receive as input a peak pulse power from the beam, and
- as a function of said peak pulse power from the laser beam, calculate said surface extent of the overlapping portion or a ratio of a surface extent of the overlapping portion to a surface extent of the laser footprint;
or
- receive as input a rotational velocity of the cylindrical body, and
- optionally receive as input a laser pulse frequency;
- as a function of the rotation speed of the cylindrical body (1) and optionally the frequency of the laser pulses, calculate a surface extent of the overlapping portion (41) or a ratio of a surface extent of the overlapping portion (41) to a surface extent of the laser footprint (40);
or
- receive as input a peak power of the laser beam pulses,
- receive as input a rotational speed of the cylindrical body (1), and
- calculate, as a function of the peak power of the laser beam pulses and the rotation speed of the cylindrical body (1) received, a frequency of laser beam pulses between 10 kHz and 10000 kHz, more specifically between 310 kHz and 1500 kHz to achieve a surface extent of the overlapping portion (41) between 10 % and 90%, more specifically between 25% and 75%, of the surface extent of the laser footprint (40).

In a 153rd aspect according to any of the previous aspects from 107, the control unit (15) is configured to:

- receive as input a desired maximum surface roughness of the cylindrical body,
- depending on said maximum desired surface roughness, calculate at least one of:

   o a surface extent, optionally a range of values of said surface extent, of the overlapping portion
   o a relationship between a surface extent of the overlapping portion (41) and a surface extent of the laser footprint (40).

In a 154th aspect according to the previous aspect, the control unit is configured to:

- according to said surface extent of the overlapping portion or said ratio, calculate at least one among:

   o a peak power of the laser beam pulses,
   o an average power of the laser beam pulses,
   o a rotational speed of the cylindrical body,
   o a frequency of laser pulses;

In a 155th aspect according to any of the previous 153 and 154 aspects, said maximum surface roughness is between 0.05 $\mu$m and 3.0 $\mu$m.
In a 156th aspect according to any of the previous aspects from 107, said surface extent of the overlapping portion is between 10% and 90%, specifically between 25% and 75%, of the surface area of the laser footprint.
In a 157th aspect according to any of the previous aspects from 102, said peak power of laser beam pulses is between 5 kW and 1000 kW, specifically between 100 kW and 500 kW.
In a 158th aspect according to any of the previous aspects from 102, said rotation speed of the cylindrical body is between 5 RPM and 250 RPM, optionally between 20 RPM and 100 RPM.
In a 159th aspect according to any of the previous aspects from 106, said laser footprint has a surface extent between 70 $\mu$m$^2$ and 20,000 $\mu$m$^2$ , optionally between 500 $\mu$m$^2$ and 5,000 $\mu$m$^2$ .
In a 160th aspect according to any of the previous aspects from 111, said method for surface restoration of cylindrical bodies is a method of grinding the lateral surface (4) of said cylindrical bodies (1).
In a 161st aspect according to any one of the preceding aspects from 111, said method includes at least one restoration procedure (2000) of the lateral surface (4) of the cylindrical body (1), optionally wherein said restoration procedure (2000) is in accordance with any one of aspects 1 to 101.
In a 162nd aspect according to the previous aspect, said restoration procedure (2000) includes said removal procedure (2002) comprising the steps of:

   o move (2002a) at least one between the cylindrical body (1) and said at least one laser emitter (600, 600"),

o command (2002b) the at least one laser emitter (600, 600") to emit said pulsed laser beam, said pulses being capable of removing material from the cylindrical body (1),

and in which said laser beam pulses are temporally staggered with each other.

In a 163rd aspect according to the preceding aspect, said step of moving (2002a) at least one between said cylindrical body (1) and said at least one laser emitter (600, 600") and said step of commanding the at least one laser emitter (600, 600") to emit (2002b) a pulsed laser beam are substantially simultaneous with each other.

In a 164th aspect according to any of the preceding aspects from 107, each overlapping portion between said overlapping portions (41) extends over a surface extent between 10 percent and 90 percent of a surface extent of the laser footprint, optionally between 25 percent and 75 percent, optionally between 50 percent and 75 percent, or between 25 percent and 50 percent.

In a 165th aspect according to any of the previous aspects from 102, each laser pulse results in the formation of a crater on the lateral surface (4) of the cylindrical body (1).

In a 166th aspect according to the previous aspect, said crater presenting a surface extent between 70 $\mu m^2$ and 20,000 $\mu m^2$.

In a 167th aspect according to any of the previous 165 and 166 aspects, said crater corresponds, for example in position and/or shape, to said laser footprint (40).

In a 168th aspect according to any of the previous aspects from 165, said crater has surface extent substantially equal to said laser footprint (40).

In a 169th aspect according to any of the previous aspects from 102, each laser pulse results in the formation of a crater on the lateral surface (4) of the cylindrical body (1), said crater presenting a depth between 1 $\mu m$ and 20 $\mu m$.

In a 170th aspect according to any of the previous aspects from 107, a portion of the overlap (41) generated by the partial overlap of a first laser pulse and a second laser pulse results in the formation of a crater on the lateral surface (4) of the cylindrical body (1), said crater presenting a depth between 10 $\mu m$ and 100 $\mu m$.

In a 171st aspect according to any of the preceding aspects from 102 and/or from 110 and 111, said cylindrical bodies (1) are rolling cylinders in particular made of metallic material in particular including steel or cast iron.

In a 172nd aspect according to any of the previous aspects, the lateral surface (4) of said cylindrical bodies is made of metallic material particularly including steel or cast iron.

In a 173rd aspect according to any of the preceding aspects from 111, said method of restoration is performed by means of an apparatus (10) in accordance with any of aspects 102 to 110.

In a 174th aspect in accord with aspect 2, said method of restoration is according with any of aspects 102 to 172.

DETAILED DESCRIPTION

A cylindrical body surface processing apparatus 1 is identified in the attached tables under reference number 10, specifically for surface restoration of rolling\laminating cylinders. This apparatus may be configured to perform a grinding operation on the lateral surface of laminating cylinders.

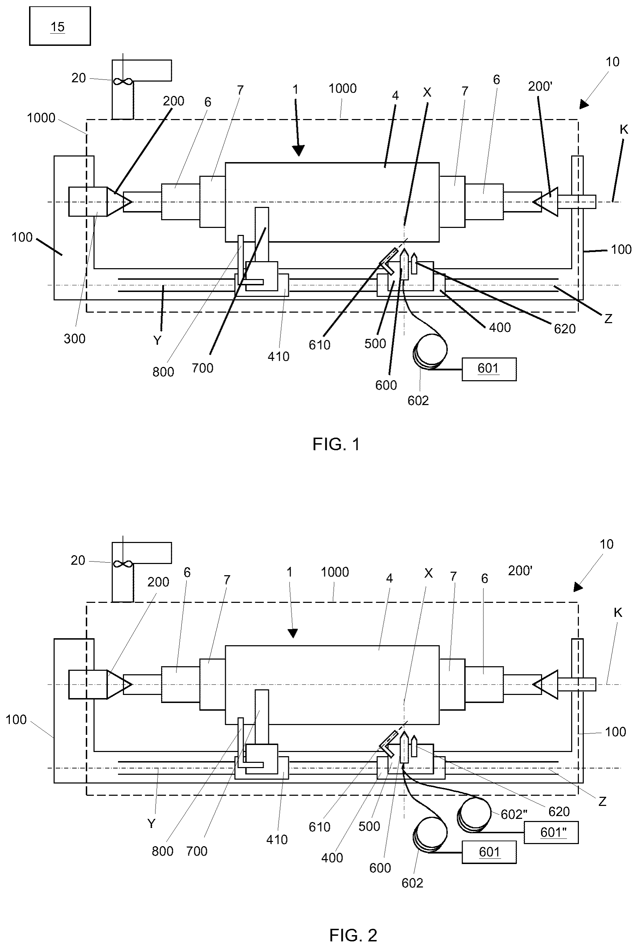

The cylindrical body 1, or laminating cylinder 1, shown schematically in Figures 1 to 4, may have a length of the side working surface between 500 mm and 2500 mm, a diameter between 50 mm and 1500 mm. The cylindrical body may be made of metallic material, such as steel or cast iron.

Cylinder 1 has a lateral surface 4 extending along an axis of rotation K: lateral surface 4 defines the portion of the cylindrical body that is operational during the rolling stages. In other words, the lateral surface 4 defines the portion of the cylindrical body intended for laminating process.

The cylindrical body, during one of its grinding steps or external surface processing, is arranged at a work station defined by a support structure 100 configured to rotationally support the cylindrical body 1 around the rotation axis K.

The cylindrical body 1, at the work station 100, is supported by means of supports 200 that allow its rotation about the axis of rotation K of the cylinder 1. In one embodiment, shown in Figure 1, the apparatus includes a first and a second support 200, 200' to define a tip and tailstock system, to axially support the cylinder being machined. Specifically, the first and a second support 200, 200' are axially aligned along a direction coincident with the axis of rotation K of the cylindrical body when the latter is housed in the work station 100.

In an alternative embodiment, the cylinder is supported on the necks 6, defining areas of the cylinder, usually with a smaller diameter than the lateral surface 4, where the bearings are mounted to insert the cylinder into the rolling mill: in this case, cylinder support may be via plain bearings.

In a further alternative embodiment, the cylinder is supported on shoulders 7 interposed axially between the lateral surface 4 and necks 6: specifically, shoulders 7 have intermediate diameters between the diameter of the necks and the diameter of the lateral surface 4 of the cylindrical body, where necks 6 have the smallest diameter.

In other words, and in accordance with the embodiments previously described, workstation 100 is configured to support the cylindrical body and to enable, or determine, its rotation about its axis of rotation K: in particular, workstation 100 defines an operating location suitable to accommodate cylindrical body 1.

The apparatus may also include a motor 300, shown in Figure 1, operatively connected to the cylindrical body and configured to place the cylindrical body 1 in rotation around the axis of rotation K during a lateral surface grinding step 4.

The apparatus also includes at least one 600, 600" laser emitter cooperating with the workstation 100 and configured to emit at least one laser beam in the direction of the apparatus operating location 10 in which the cylindrical body 1 is housed.

Specifically, the 600, 600" laser emitter is connected, via an optical fiber 602, 602", to a laser source 601, 601" configured to generate the laser beam and direct it, via the optical fiber, to the laser emitter.

In an alternative embodiment, not shown in the figures, the 600, 600" laser emitter is connected to the 601, 601" laser source through a system of reflective mirrors, suitable for carrying the beam, by successive reflections, from the laser source to the laser emitter. In this case, the optical fiber is then replaced by an air path of the laser beam, protected within appropriate passages. Specifically, the apparatus comprises the reflective mirror system in an embodiment in which the laser source is configured to emit a pulsed laser beam having durations of less than 100 fs, specifically between 0.1 fs and 100 fs, specifically between 1 fs and 50 fs. The Applicant points out that the transmission of the pulsed laser beam, when having pulse durations in the range of fs, benefits from the presence of reflective mirrors in place of a fiber optic cable. As will become clear later in the description, the mirror system may thus be used during the semi-finishing stages.

Laser sources may be mainly solid-state (e.g., fiber, disk, Nd:YAG, Yb:YAG, Nd:YVO$_4$, diode), with continuous or pulsed laser beam emission. The type of laser source may be defined according to the type of grinding to be performed on the cylindrical body 1.

Pulsed laser beams whose duration is in the order of magnitude of ns (nanoseconds), ps (picoseconds), fs (femtoseconds) may be used for ablation-based processing. Laser pulses may be emitted at frequencies between 1 kHz and 50 MHz, and wavelengths close to infrared (e.g., wavelengths of about 1 $\mu$m) or visible light (e.g., wavelengths of about 0.5 $\mu$m) or close to ultraviolet light (wavelengths of about 0.3 $\mu$m). The average power of the laser beam may be moderate, typically greater than 1W, e.g. 50-200 W: in contrast, the peak power of the laser beam pulses may be very high, typically greater than 10 kW and up to values greater than 1 MW).

A laser with continuous or modulated emission with long pulses ($\mu$s to ms or more) may be used to carry out polishing processes on the entire cylinder or localized (crack repair).

A pulsed laser may also be used for cleaning processes (laser cleaning) to remove oxides, debris, and impurities locally or on the entire cylinder.

Details of the control parameters used to perform laminating cylinder grinding are detailed later in the description.

All processes may be coupled to beam shaping systems with oscillating beams or formed for large area processing through dynamic systems.

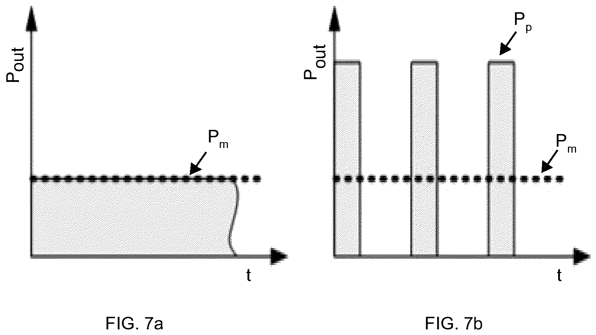

Figure 7a shows the Pout output power of a continuous laser beam, while Figure 7b shows the output power of a pulsed laser beam. In particular, the dashed line defines an average power of the laser beam: in the case of a continuous laser beam, this dashed line corresponds to a constant power of the laser beam. In the case shown in Figure 7b, the laser beam is emitted in pulses defining a peak power $P_p$, and an average power $P_m$, in which the peak power is greater than the average power. For the same average power, the continuous laser emits the average power constantly, while the pulsed laser emits a series of short pulses that, averaged over time, define an average power equivalent to that of a continuous laser. However, the present invention shows that a high peak power, compared to the average power, is particularly suitable for causing vaporization/ablation of the metallic material of the cylindrical body. For the same total energy and average power emitted by the laser, a continuous laser beam and a pulsed laser beam produce different results. A continuous laser beam or one having pulses of very long duration will tend to locally melt the material, and for this reason it is considered more suitable for finishing processing: on the contrary, a short-pulsed laser beam, due to high-power peaks, will tend to sublimate the material, and for this reason it is considered more suitable for removal/roughing/semi-finishing operations.

The amount of material removed is related to the peak power; consequently, at the same average power, the material removed increases as the pulse duration decreases.

The laser emitter 600, 600" is arranged alongside the operational seat housing the cylindrical body and is movable at least along a main axis Z substantially parallel to the axis of rotation K of the cylindrical body 1. When the cylindrical body 1 is housed in the operative location, the laser emitter is thus configured to move substantially parallel to the lateral surface 4 of the cylindrical body 1.

The apparatus may comprise a carriage 400 and a respective rail, in which the carriage 400 is movable along the main axis Z on the rail: the laser emitter may be carried and tethered to that carriage 400 to move along the main axis Z, as shown in Figure 1.

The apparatus may also include a sled 500 carried by, and constrained to, the carriage 400 and movable along a direction transverse to the main axis Z. In particular, the sled 500 may carry the laser emitter 600, 600" to allow it to move closer to and further away from the lateral surface 4 of the cylindrical body. Such transverse movement to the cylindrical body makes it possible to vary the position of the focus point of the laser beam emitted by the laser emitter with respect to the surface of the cylinder, to follow the profile of the surface to be processed, and to adapt the positioning of the laser emitter 600, 600" to cylindrical bodies of various diameters.

Movement of the carriage 400 and the slide 500 may preferably be by linear electric actuators or motors or other types of actuators, such as motors and ball screws with high precision in terms of displacement and high responsiveness to commands imposed by the control system.

As previously discussed in the state of the art section, the lateral surface of the cylindrical body tends to wear during the rolling stages, such as during the rolling of semi-finished metal products, e.g., metal strips: this results in the lateral surface of the cylindrical body becoming cracked, deformed, or work hardened, such that the lateral surface of the cylindrical body needs to be ground.

In this regard, the apparatus includes at least one profile detector 700, shown in Figures 1-4, which is configured to detect a profile of the lateral surface of the cylindrical body: in other words, such a profile detector 700 is configured to detect defects in the surface of the cylindrical body, so as to determine the points at which it is necessary to act and the manner in which to act with the laser beam. The profile detected by the detector 700 is called the detected surface profile DSP.

The profile detector 700 is movable at least along a detection axis Y substantially parallel to the axis of rotation K of the cylindrical body 1, to detect the profile along the entire length of the lateral surface of the cylindrical body 1. The profile detector 700 may comprise a gauge including one or more movable arms configured to contact, by means of a tip mounted at the end of each of the movable arms, the lateral surface 4 of the cylindrical body 1. Such arms define probes that, as they move according to changes in the profile of the lateral surface 4 of the cylindrical body, describe that profile. Alternatively, the profile detector 700 may include a noncontact distance detector configured to measure an interposed distance with the lateral surface of the cylindrical body 1: in particular, the noncontact distance detector may include an optical detector, such as a laser, or a time-of-flight detector.

Specifically, the profile detector is capable of detecting an elevation change in the lateral surface 4 resulting from a change in the diameter of the cylindrical body.

In more detail, the profile detector 700 is configured to detect a representative parameter of the profile of cylindrical body 1 comprising at least one of a diameter of cylindrical body 1, a variation in diameter of cylindrical body 1, or an interposed distance between the detector and the profile of the lateral surface of cylindrical body 1: this representative parameter varies according to the conditions of the outer profile of cylindrical body 1.

It should also be noted that the representative parameter of the outer profile may vary as a function of the angular position of the cylindrical body 1 and the position of the profile detector 700 along the Detection axis Y. In particular, the surface profile of the cylindrical body includes an altimetric parameter that varies as a function of the angular position of the cylindrical body 1, and/or a linear position along the detection axis Y.

Advantageously, the profile detector 700 may be complemented by an auxiliary defect detector 800 suitable for detecting surface defects on the lateral surface of the cylindrical body. Such auxiliary defect detector 800 may include an eddy current inductor and/or ultrasonic emitter, suitable for determining the location, shape, and size (including depth) of localized surface defects, such as cracks, dents, or the like.

Advantageously, there may also be a roughness meter, for measuring the roughness of the cylinder surface; such a roughness meter may be of the contact touch probe type, or *contactless.*

The apparatus may include an auxiliary carriage 410 and a respective rail, in which the auxiliary carriage 410 is movable along the Detection axis Y along the rail: the profile detector 700, and optionally, if present, also the auxiliary defect detector 800 and/or the roughness tester, may be carried by and constrained to such auxiliary carriage 410 to move along the main Y axis, as shown in Figure 1.

In an embodiment, for example shown in the attached figures 1 to 4, the Detection axis Y may be coincident with the main axis Z of the 600 laser emitter.

In addition, the apparatus 10 may include a distance meter 620 configured to detect an interposed distance between the laser emitter 600, 600" and the surface of the cylinder being processed: the distance between the laser emitter and the lateral surface 4 of the cylindrical body 1 influences the effectiveness of the laser to remove metallic material, as the focal position of the laser relative to the cylinder surface varies with this distance. If the distance between the laser emitter and the lateral surface 4 of the cylindrical body 1 is found to be outside a predefined range, the laser may be moved closer to or further away from the cylindrical body manually or by an actuator, such as an electric actuator. Additionally, a control unit may be configured to detect the distance interposed between the laser and the cylindrical body, compare that distance with a target distance, and, depending on that comparison, command an actuator to move the laser emitter closer or further away. Such distance correction may be performed before starting a cylindrical body grinding procedure, or it may also be performed during grinding operations so as to update the position of the laser emitter as the diameter of the cylindrical body changes.

The apparatus may also include a gas nozzle 610 adjacent to the laser emitter 600 and configured to generate a gas flow in the direction of the portion of the cylindrical body 1 on which the laser beam insists. Advantageously, the gas is a nonoxidizing gas, such as an inert gas, such as nitrogen, helium, or argon. Alternatively, reactive gases, such as oxygen, may be used to achieve chemical changes on the surface affected by the laser beam.

The gas nozzle is configured to emit said gas during an apparatus operating condition, specifically when the laser emitter emits the laser beam on the cylindrical body 1.

The apparatus may further comprise a cover structure 1000 including side walls, and an upper wall to define a containment volume for the work area and cylindrical body 1. The cover structure 1000 defines a safety barrier configured to contain, within the containment volume, an operational laser beam, e.g., class 4. It should be noted that the laser beam, if not contained, may define a substantive risk to human health.

The cover structure 1000 also includes a vacuum system 20 configured to suck up the material removed during cylindrical body grinding. In fact, laser grinding results in the vaporization of the metal material, generating very fine metal dust that is potentially harmful to human health. The suction system 20 is therefore configured to determine a flow of air suitable for sucking up such dust during a grinding condition. The suction system may include one or more filters suitable for retaining such dust. In addition, the presence of the gas nozzle 610 would, if the apparatus were not provided with the cover structure, contribute to the spread of metal dust, raising the level of risk to human health.

The preceding description includes the main components and main features of apparatus 10. However, apparatus 10 may be set up in accordance with various different embodiments of each other, each of which may be in accordance with the present invention and the present inventive concept.

Figure 1 shows an initial configuration in which the apparatus comprises a single laser source 601 connected via the respective fiber optic cable 602, or via an appropriate reflective mirror system, not shown in the figure, to a single laser emitter 600. Furthermore, in such an embodiment, the laser emitter 600 and the profile detector 700 are independently movable along the main axis Z, as they are carried by the carriage 400 and the auxiliary carriage 410, respectively. In accordance with the first configuration, the laser emitter is independently movable with respect to the profile detector 700: this allows the laser beam to operate on the lateral surface 4 of the cylindrical body, regardless of the position assumed by the profile detector along the main axis Z.

Figure 2 shows a second configuration in which the apparatus comprises a first laser source 601 and a second laser source 601", both of which are connected by respective fiber optic cables 602, 602", or by respective reflective mirror systems, not shown in the figure, to the same laser emitter 600. Preferably, the second laser source 601" is of a different type than the first laser source 601: thus, by activating either the first or the second source, a wider range of processing may be performed, increasing the flexibility of the apparatus. For example, the first laser source may be configured to perform coarse material removal machining, while the second laser source may be configured to perform surface finishing machining. In this configuration, it is generally possible to change the type of processing during several passes of the carriage 400: however, it is not possible to perform two different types of processing at the same time, as there is a single laser 600 emitter.

Furthermore, in the second configuration, similar to the first configuration, the laser emitter 600 and the profile detector 700 are independently movable along the main axis Z, as they are carried by the carriage 400 and the auxiliary carriage 410, respectively. In accordance with the second configuration, the laser emitter is independently movable with respect to the profile detector 700: this allows the laser beam to operate on the lateral surface 4 of the cylindrical body, regardless of the position assumed by the profile detector along the main axis Z.

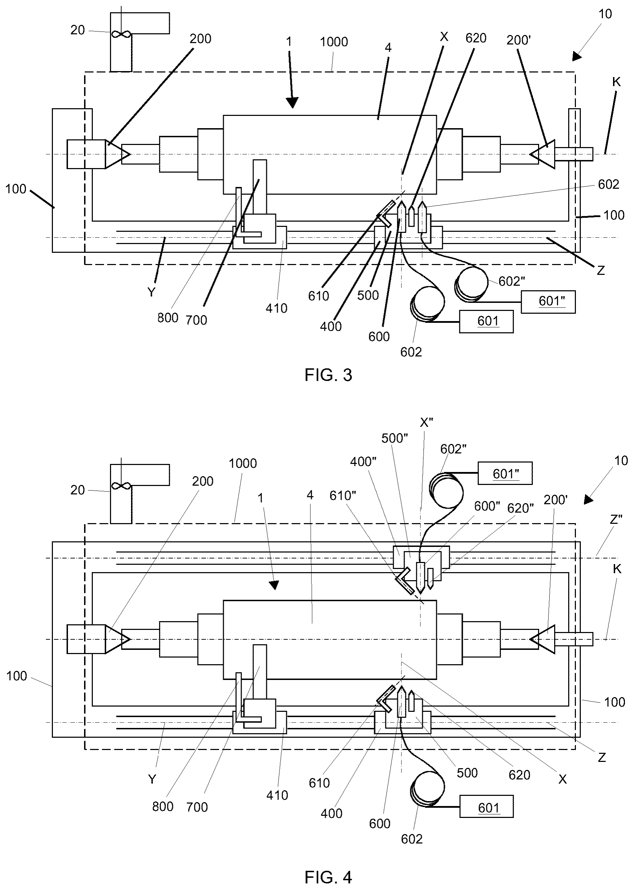

Figure 3 shows a third configuration in which apparatus 10 includes:

- a first laser source 601 connected by a respective fiber optic cable 602 (or by a respective reflective mirror system, not shown in the figure) to a first laser emitter 600, and
- a second laser source 601" connected by a respective fiber optic cable 602" (or by a respective reflective mirror system, not shown in the figure) to a second laser emitter 600" distinct from the first laser emitter 600.

In particular, note that the first laser emitter and the second laser emitter 600, 600" are carried by a common carriage 400 moving along the main axis Z, and are offset from each other along the main axis Z, such that the laser beam of the first laser emitter 600 engages a different portion of the cylindrical body 1 than the laser beam of the second laser emitter 600". For example, the first and second laser emitters may be parallel and spaced apart, as shown in Figure 3, and bound to the same common carriage 400.

The second laser source 601" may be of a different type than the first laser source 601: thus, by activating either the first or the second laser source, a wider range of processing may be performed, increasing the flexibility of the apparatus 10. For example, the first laser source may be configured to perform coarse material removal machining, while the second laser source may be configured to perform surface finishing machining. In this third configuration, unlike the second, it is therefore possible to perform two different types of processing in the course of a single pass of the laser beam, thereby reducing the time required for processing.

Alternatively, the first and second laser sources may be of the same type and be directed to different areas of the cylindrical body, as shown in Figure 3: thus, two similar processes may be carried out in the course of a single pass of the laser beam, consequently reducing the time required for processing.

Furthermore, in the third configuration, similar to the first and second configurations, the first and second laser emitters 600, 600" are movable along the main axis Z independently of the profile detector 700, as they are carried by the carriage 400 and auxiliary carriage 410, respectively. This allows two laser beams to operate on the lateral surface 4 of the cylindrical body, regardless of the position taken by the profile detector along the main axis Z. However, the first and second laser emitter 600, 600" are constrained to each other, being mounted on the same common carriage 400.

Figure 4 shows a fourth configuration in which apparatus 10 includes:

-   a first laser source 601 connected by a respective fiber optic cable 602 (or by a respective reflective mirror system, not shown in the figure) to a first laser emitter 600, and
-   a second laser source 601" connected by a respective fiber optic cable 602" (or by a respective reflective mirror system, not shown in the figure) to a second laser emitter 600" distinct from the first laser emitter 600.

In particular, note that in accordance with the fourth configuration, the first laser emitter 600 is carried by a first carriage 400, while the second laser emitter 600" is carried by a second carriage 400" distinct and separate from the first carriage 400. The first carriage 400 is movable along the main axis Z, while the second carriage 400" is movable along an auxiliary axis Z" parallel to the axis of rotation K of the cylindrical body 1 and parallel to the main axis Z of the first carriage.

In accordance with the fourth configuration, the laser beam of the first 600 emitter engages a different portion of the cylindrical body 1 than a portion engaged by the laser beam of the second 600 emitter." For example, the first and second laser emitters may be opposite to each other or angularly offset from the axis of rotation K. In the fourth configuration, the first laser emitter 600 is movable along the main axis Z independently of a movement of the second laser emitter 600" along the auxiliary axis Z".

On the auxiliary carriage 400" there is an auxiliary slide 500" movable along an axis X" transverse or perpendicular to the cylindrical body. The second laser emitter 600" is solidly bound to the auxiliary slide 500", so that it too is movable in approach and away with respect to the cylindrical body 1.

In accordance with the fourth configuration, the first laser source 601 may be the same and set identically to the second laser source 600": thus, the first and second emitters may perform the same type of processing on the cylindrical body simultaneously and at different portions of the lateral surface 4. Alternatively, but in accordance with the fourth configuration, the first laser source 601 may be different or be set differently than the second laser source 600": for example, the first laser source may emit a laser beam having a control parameter, such as a peak or average power, or a pulse duration, different than the laser beam emitted by the second laser source. In this way, the first and second emitters may perform different types of processing simultaneously.

Similar to the above, the apparatus in accordance with the fourth configuration includes an auxiliary nozzle 610" for insufflation of gas in the direction of the laser beam impact zone on the lateral surface of the cylindrical body. Finally, there is an auxiliary distance meter 620" configured to detect an interposed distance between the second laser emitter 600" and the surface of the cylinder being processed.

With one piece of apparatus in accordance with the fourth configuration, it is possible to carry out two laser machining operations, for example, of different types, requiring two different types of lasers, by optimizing the speed of the laser moved along the cylinder surface. In fact, in general, the 400 and 400" carriages are independent of each other and may move at different speeds along the main axis Z and the auxiliary axis Z", respectively.

The control unit is then configured to move the first and second 600, 600" laser emitter independently in order to reduce processing time.

In accordance with the above description, the apparatus 10 may include an oscillation system configured to determine a spatial oscillation of the direction of the laser beam 12 emitted by the laser emitter 600, 600" at an oscillation frequency. The oscillation frequency may be between 10 Hz and 20,000 Hz, more particularly between 100 Hz and 10,000 Hz, more particularly between 200 Hz and 2,000 Hz, more particularly between 200 Hz and 2,000 Hz.

The oscillation system is then configured to define an apparent spatial shape of the laser beam 12: for example, the apparent spatial shape of the laser beam, i.e., the trajectory of its oscillation, may be, as a consequence of said oscillation, elongated rectilinear, circular, elliptical, ovoid, or rectangular. The oscillation of the laser beam may be determined by causing one or more lenses or mirrors incident with the laser beam to oscillate: the lenses and/or mirrors may be moved by piezoelectric actuators. Alternatively, the oscillation system may include deformable mirrors.

Sufficiently high oscillation frequencies of the laser beam, e.g., in the range of hundreds of Hz, allow for an apparent zone of action of the laser beam. In this way the material is processed with an apparent shape of the laser beam, e.g., similar to that of the scan trajectory.

The oscillation system may be configured to vary the direction of the laser beam along a single axis, consequently determining a laser beam having a linear apparent shape. Alternatively, the oscillation system may be configured to vary the direction of the laser beam along two axes, allowing a laser beam having a two-dimensional apparent shape to be defined. In this case, the apparent shape of the laser beam may be circular, elliptical, triangular, or rectangular.

The oscillation frequency may be fixed during the restoration procedure 2000, for example, during the entire removal procedure 2002.

Alternatively, control unit 15 of apparatus 10 may be configured to vary the oscillation frequency during the removal procedure 2002, for example, according to the speed, rotational or tangential, of cylindrical body 1. In particular, control unit 15 may be configured to increase the oscillation frequency as the speed of the cylindrical body increases. In addition, control unit 15 may be configured to decrease the oscillation frequency as the speed of the cylindrical body decreases.

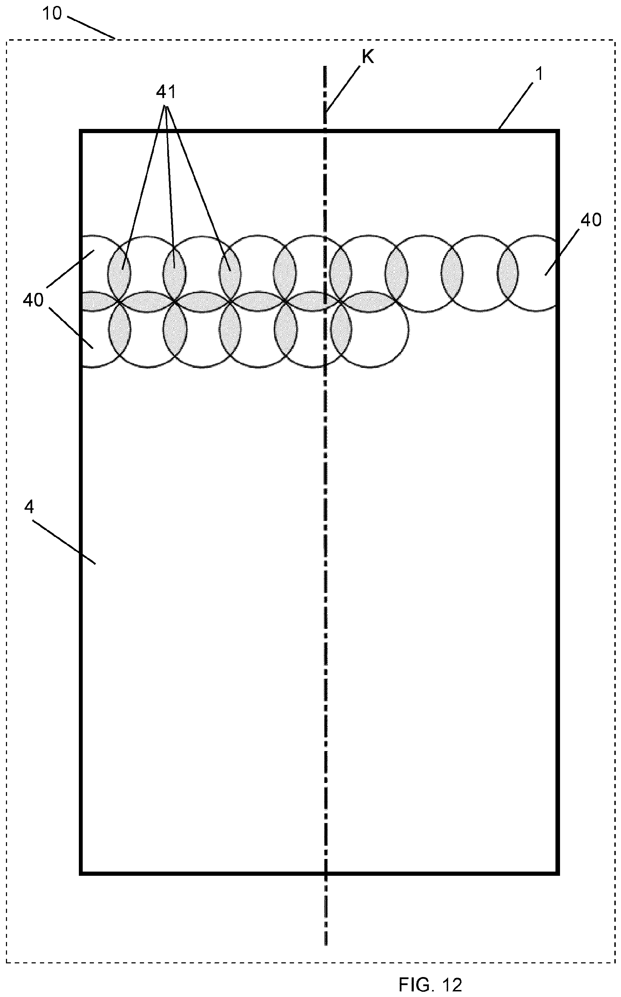

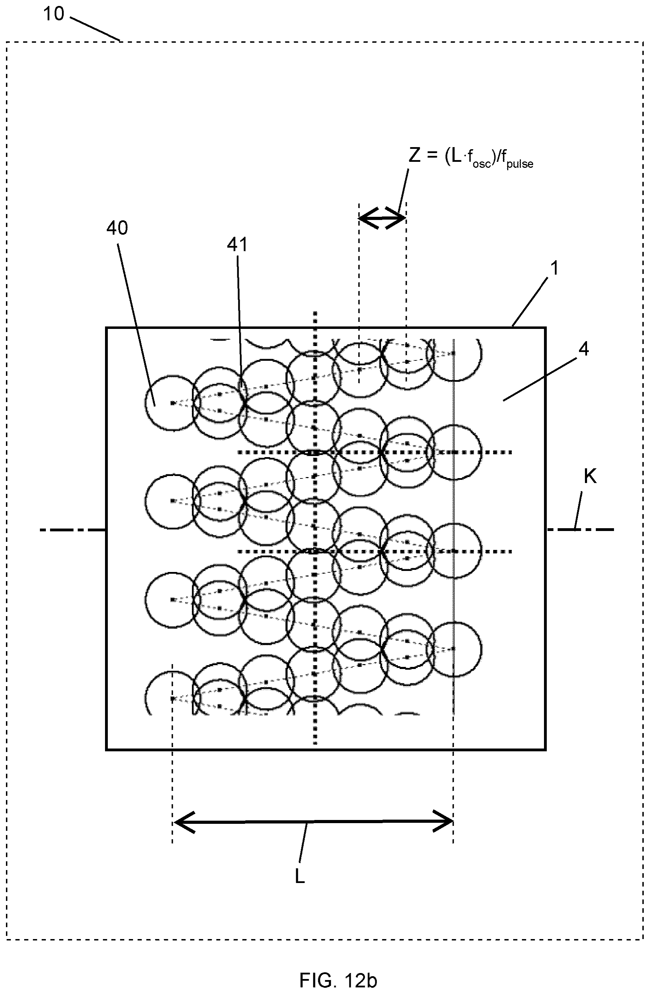

Such an oscillation system may result, during an operating condition of the apparatus, in a translation of the laser beam at the lateral surface 4 of the cylindrical body 1 between 0.05 mm and 5 mm, more specifically between 0.1 mm and 2 mm. For example, the spatial oscillation of the laser beam determined by the oscillation system defines a movement of the laser beam along a predefined trajectory that may include at least one among a circular trajectory, a straight trajectory, a curved trajectory, or an elliptical trajectory. For example, the oscillation system may be configured to move the laser beam along a trajectory essentially parallel to the axis of rotation of the cylindrical body, as shown in Figure 12b.

The oscillation system may be combined with either a constant-emission laser beam, such as a time-constant laser beam, or a pulsed-emitted laser beam.

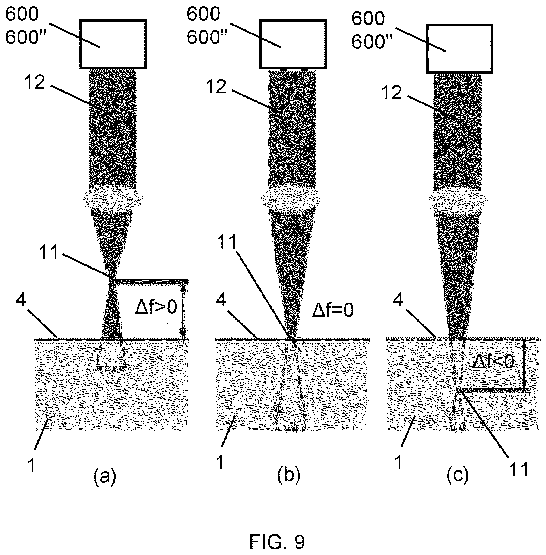

In an embodiment, the 600, 600" laser emitter may be configured to direct the laser beam toward a focus point 11, as shown in Figures 9a, 9b and 9c. In other words, the 600, 600" laser emitter may converge the beams constituting the laser beam substantially toward a single point defined by said focus point 11. The power density of the laser beam, that is, the normalized power per unit area, is greatest at the focus point, and decreases as the distance from focus point 11 increases. In fact, the laser beam condenses its entire power at focus point 11.

The focus point thus defines a minimum spatial dimension, specifically a minimum cross-sectional dimension, of the laser beam. In contrast, the surface cross-sectional extent of the laser beam increases as the distance from focus point 11 increases: outside of focus point 11, the laser beam power is in fact distributed over a gradually increasing surface area.

The '600, 600" laser emitter is configured to define the focus point 11 at a blurring distance $\Delta f$ relative to a reference plane defined, during an apparatus operating condition, by the lateral surface 4 of the cylindrical body 1. The focus point and the corresponding blurring distance $\Delta f$ are schematically depicted in Figures 9a, 9b and 9c. Note that when the focus point 11 lies on the lateral surface 4, the blurring distance $\Delta f$ is zero, as shown in Figure 9b: on the contrary, when the focus point 11 does not lie on the lateral surface 4, the blurring distance $\Delta f$ has a non-zero value. In more detail, and according to Figures 9a and 9c, respectively, a blur distance $\Delta f > 0$ indicates a focus point outside the cylindrical body 1, while a blur distance $\Delta f < 0$ indicates a focus point inside the cylindrical body 1. In other words, a focus point $\Delta f > 0$ is interposed between the 600, 600" laser emitter and the lateral surface 4 of the cylindrical body. In contrast, a focus point $\Delta f < 0$ is interposed between the lateral surface 4 of the cylindrical body 1 the axis of rotation K of the cylindrical body.

During the removal procedure 2002, control unit 15 may be configured to command the laser emitter to define a blur distance $\Delta f$ between +2 and -2 mm, more particularly between +1 mm and -1 mm, even more particularly between +0.5 mm and -0.5 mm. In more detail, the blurring distance $\Delta f$ is between 0.01 mm and 2 mm, more particularly between 0.1 mm and 1 mm, more particularly between 0.1 mm and 0.5 mm.

As previously described, the control unit 15 may be configured to command, during the removal procedure 2002, the laser emitter 600, 600" to emit a pulsed laser beam 12: these laser pulses are apt to remove material from the cylindrical body 1 to enable grinding of the cylindrical body 1, where specifically the cylindrical body 1 is a rolling cylinder. In such a configuration, the removal procedure 2002 includes:

- moving 2002a at least one between the cylindrical body 1 and the laser emitter 600, 600", and
- commanding the laser emitter 600, 600" to emit 2002b the pulsed laser beam toward the operating site of the workstation: specifically, the laser pulses are directed toward the lateral surface 4 of the cylindrical body 1.

In accordance with a preferred embodiment, the step of moving at least one between the cylindrical body 1 and the laser emitter 600, 600" includes placing the cylindrical body 1 in rotation about its axis of rotation K. Alternatively, the apparatus may provide that the cylindrical body 1 is fixed and the laser emitter is movable around the cylindrical body 1.

The laser beam pulses are temporally staggered with each other to define a laser pulse frequency: specifically, the frequency of laser pulses may be between 10 kHz and 10000 kHz, more specifically between 10 kHz and 1500 kHz.

Each laser pulse directed toward the lateral surface 4 of the cylindrical body 1 is configured to define, on the lateral surface 4 of the cylindrical body 1 during the operating condition of the apparatus, and in particular during the removal procedure 2002, a respective laser footprint 40. The laser footprint may define an area, and its boundaries, of the lateral surface 4 of the cylindrical body 1 of material removal from the cylindrical body: in other words, a laser pulse 10 removes metallic material from the lateral surface 4 of the cylindrical body substantially at said laser footprint 40, defining a crater having a depth relative to the lateral surface 4 of the cylindrical body.

Laser footprint 40 may have a shape in the group between circular, elongated circular, elliptical, and curvilinear having a convex contour. The shape of a laser footprint may vary as a function of a duration of the laser beam pulse defining the laser footprint, an energy of the laser beam pulse, a rotation speed of the cylindrical body around the rotation axis K during the emission of the laser pulse, or a shape of the laser beam.

The laser imprint may have a surface extent between 70 $\mu$m$^2$ and 20,000 $\mu$m$^2$. This surface extent of the laser beam 12 may be modified by commanding the laser emitter to change the focus point by moving the focus point away from or closer to the lateral surface 4 of the cylindrical body.

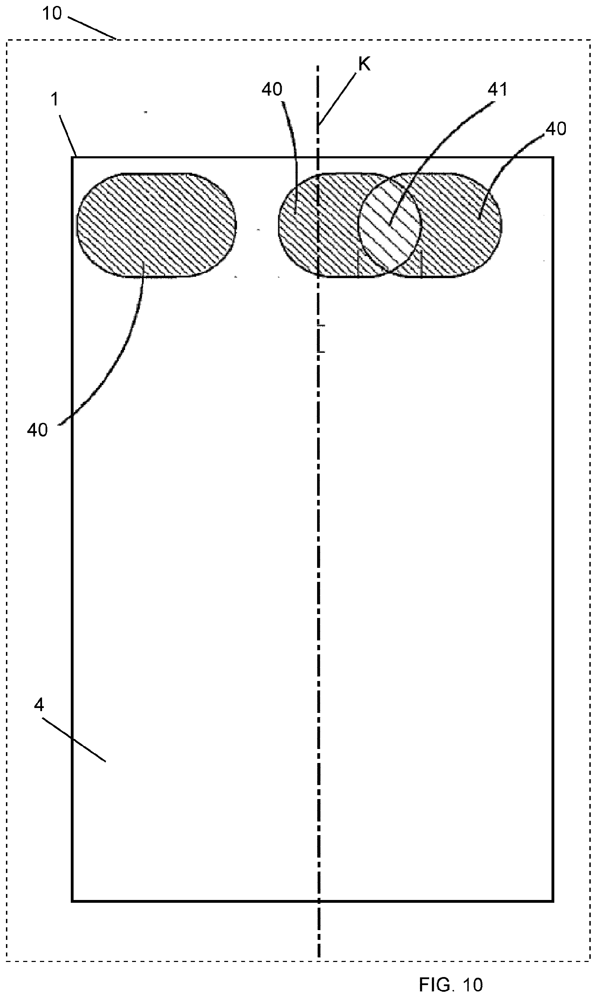

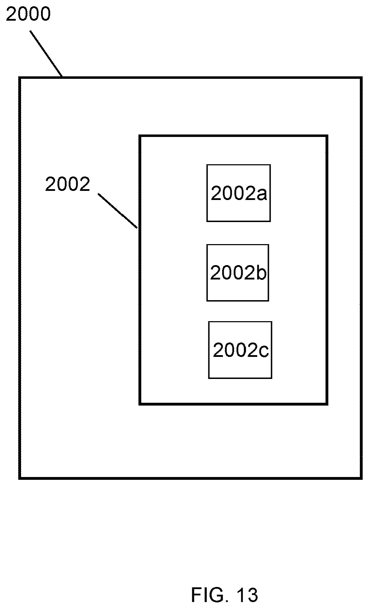

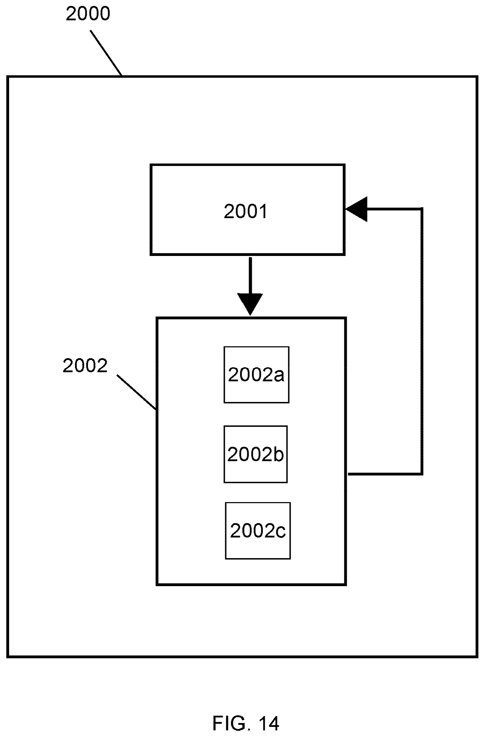

In accordance with an embodiment shown in Figures 10-12 and shown in terms of method steps in Figures 13 and 14, laser pulses define laser footprints 40 at least in partial overlap with each other by forming respective overlapping portions 41 between laser footprints 40. Each overlapping portion 41 preferably extends over a surface extent of between 10 % and 95 % of a surface extent of the laser footprint 40, more preferably between 20 % and 75 %. In one configuration, the removal procedure 2002 may include defining portions of the overlay having surface extent between 50 % and 75 % of a surface extent of the laser footprint 40. Alternatively, the removal procedure 2002 may include defining overlapping portions having surface extent between 20 % and 50 % of a surface extent of the laser footprint 40. In a specific embodiment, the removal procedure 2002 may include defining portions of the overlap having surface extent substantially equal to 50% of a surface extent of the laser footprint 40. In fact, it should be noted that since the cylindrical body is rotating and the laser pulses are temporally staggered with each other, successive laser footprints of each other will engage portions of the lateral surface 4 of the cylindrical body 1 that are distinct from each other, as shown schematically in Figures 10-12, and partially overlapping with each other.

In more detail, the overlapping portions 41 are defined by the partial overlap of laser footprints 40 that are consecutive to each other, specifically immediately consecutive to each other. The term immediately consecutive to each other means that, given a first laser pulse and a second laser pulse that are temporally staggered by a time duration equal to the inverse of the laser pulse frequency, the second laser pulse generates a second laser footprint partially overlapping a first laser footprint generated by the first pulse.

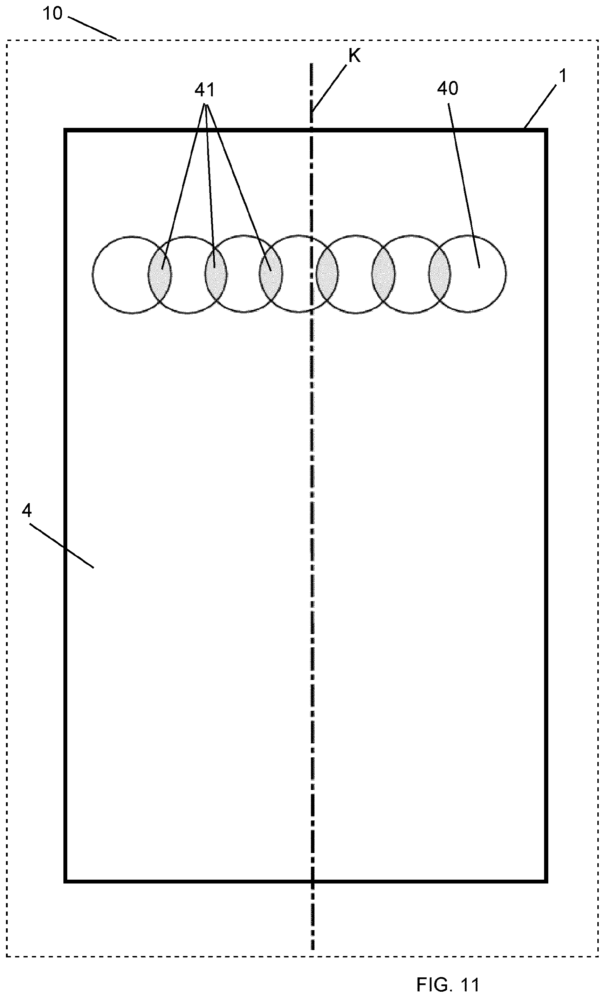

In an optional configuration, in which a third pulse, consecutive to and distinct from the first pulse and the second laser pulse, may generate a third laser imprint partially overlapping the second laser imprint but external to the first laser imprint: this configuration is shown, for illustrative purposes and not intended in a limiting sense of the present invention, in Figures 11 and 12.

Alternatively, the present invention may also provide that given the above-mentioned three laser pulses, i.e., the first pulse, the second pulse and the third pulse, the third laser imprint generated by the third pulse may be partially superimposed on both the first laser imprint and the second laser imprint: such an embodiment having three laser imprints partially superimposed on each other is not shown in the attached figures only for obvious graphical representation problems.

At the same laser pulse frequency, the surface extent of each overlapping portion 41 is dependent on the relative speed between the laser beam and the cylinder surface, given in turn by the combination of the rotation speed of the cylindrical body 1, i.e., the rotation frequency of the cylindrical body, and, if present, the oscillation speed of the beam, i.e., the oscillation frequency. The rotation frequency of the cylindrical body is meant as the number of complete rotations around the rotation axis K per time unit, for example between 5 RPM and 50 RPM when in the presence of laser beam oscillation, or between 50 and 250 RPM when in the absence of laser beam oscillation. The oscillation frequency is meant as the number of complete oscillations in the unit of time accomplished by the oscillation system. Similarly, the oscillation frequency is meant as the number of complete oscillations in the unit of time accomplished by the laser beam. During the removal procedure 2002, the control unit 15 may be configured to command a speed or frequency of rotation of the cylindrical body 1, such as a rotation speed between 5 RPM and 250 RPM. Optionally, during the removal procedure 2002, control unit 15 may be configured to command a speed or frequency of oscillation of the laser beam, for example, an oscillation frequency between 10 Hz and 20,000 Hz, specifically between 100 Hz and 10,000 Hz, more specifically between 200 Hz and 21,000 Hz.

At the same frequency of laser pulses, as the relative speed between the laser beam and the cylinder surface increases, the surface extent of each portion of the overlap decreases. On the contrary, at the same frequency of laser pulses, as the relative speed between the laser beam and the cylinder surface decreases, the surface extent of each portion of the overlap increases 41.

The surface extent S of the overlapping portion 41 may be defined as a percentage, relative to a surface extent of the laser footprint 40, by the following formula:

$$S\% = \left(1 - \frac{Vr}{Ds \cdot f_{pulse}}\right) \cdot 100$$

Where:

- S% is the superficial extent of the overlapping portion 41 defined as a percentage compared with a superficial extent of the laser footprint 40;

- Vr is the relative velocity between the laser beam and the lateral surface 4 of the cylindrical body 1;
- Ds is the diameter, e.g. the average diameter, of the laser 40 footprint;
- $f_{pulse}$ is the frequency of laser pulses in particular expressed in Hz.

To generate consecutive overlapping portions between them, the frequency of laser pulses is preferably greater than the rotation frequency of the cylindrical body and, if any, the oscillation frequency of the beam: in particular, the frequency of the laser pulses may be at least "n" times greater than the rotation frequency of the cylindrical body 1, where n>100, specifically n>500, optionally n>1000, even more specifically n>3600; in addition, the frequency of the laser pulses may be at least "m" times greater than the oscillation frequency of the beam, where m>10, specifically m>50, optionally m>100, even more specifically m>360.

To resume, based on the above, the extent of the overlapping portion is closely related to the pulse frequency of the laser beam and the relative speed between the laser beam and the cylinder surface (given in turn by the combination of the rotational speed or a rotational frequency of the cylindrical body 1, and, if present, the oscillation speed or frequency of the laser beam). In one configuration, the control unit 15, depending on a desired surface extent of the overlapping portion, may be configured to:

- calculate and command the frequency of laser beam pulses, and

- calculate and command a relative velocity between the laser beam and the surface of the cylindrical body 1.

Specifically, control unit 15 may be configured to:

- receive as input or calculate a desired surface extent of the overlapping portion;
- depending on the desired surface extent of the overlapping portion 41, calculate:

  ○ the pulse frequency of the laser beam, and
  ○ the relative velocity between the laser beam and the surface of the cylindrical body,

- perform the removal procedure 2002 by setting said laser beam pulse frequency and said relative speed between the laser beam and the surface of the cylindrical body.

For example, the relative speed between the laser beam and the surface of the cylindrical body may be determined by the combination of the rotation speed of the cylindrical body around the rotation axis K and the oscillation frequency of the laser beam commanded by the oscillation system.

Control unit 15, during the removal procedure 2002, may also be configured to calculate a peak laser beam power and/or an average laser beam power depending on a desired surface extent of the overlapping portion. In more detail, control unit 15 may be configured to:

- receive as input a desired surface extent of the overlapping portion, and
- depending on the desired surface extent of the overlapping portion, calculate at least one of a peak power and/or average pulse power of the laser beam, a relative velocity between the laser beam and the surface of the cylindrical body, a frequency of the laser pulses.

For example, control unit 15 may be configured to receive as input the desired surface extent of the overlapping portion, and set a peak power of the laser beam, a relative speed between the laser beam and the surface of the cylindrical body, and the frequency of the laser pulses.

Alternatively, control unit 15 may be configured to:

- receive as input a peak pulse power from the beam, and
- according to that peak pulse power from the laser beam, calculate the surface extent of the overlapping portion;
- perform the restoration procedure 2000, specifically the removal procedure 2002, setting the surface extent of the overlapping portion 41.

In a further embodiment, control unit 15 may be configured to:

- receive as input a relative velocity between the laser beam and the surface of the cylindrical body, and
- optionally receive as input a laser pulse frequency;
- as a function of the relative velocity between the laser beam and the surface of the cylindrical body and optionally the frequency of the laser pulses, calculate the surface extent of the overlapping portion.

**In** a further embodiment, control unit 15 may be configured to:

- receive as input a peak power of the laser beam pulses,
- receive as input a relative velocity between the laser beam and the surface of the cylindrical body, and
- calculate, as a function of the peak power of the laser beam pulses and the relative velocity between the laser beam and the surface of the cylindrical body, a laser beam pulse frequency between 10 kHz and 10000 kHz to achieve a surface extent of the overlapping portion between 20 % and 90 %, optionally between 25 % and 75 %, of the surface extent of the laser footprint.

This description also points out that the percentage of overlap between two laser footprints influences the surface roughness of the cylinder body obtained at the end of the restoration procedure. **In** particular, very high values of the percentage of overlap between two successive laser footprints may induce damage to the cylinder surface, while an excessive reduction of the same percentage (or even a negative value of this percentage) may result in incomplete or coarse processing of the cylindrical body. The control unit 15 of the apparatus 10 of the present invention may be configured to calculate, as a function of a desired maximum surface roughness, a surface extent of the overlapping portion or a ratio of the surface extent of the overlapping portion to the surface extent of the laser footprint.

Once such a surface extent of the overlapping portion or such a ratio has been calculated, control unit 15 may calculate, to obtain said surface extent of the overlapping portion or such a ratio, at least one between a rotation speed of the cylindrical body, and a frequency of the laser pulses. For example, control unit 15 may calculate both the rotation speed of the cylindrical body and the frequency of laser pulses to obtain the calculated surface extent of the overlapping portion.

Additionally, control unit 15 may be configured to calculate, depending on the surface extent of the overlapping portion or such ratio previously calculated as a function of the desired roughness, at least one between a peak power of the laser beam pulses, and an average power of the laser beam pulses.

The maximum desired surface roughness may be between 0.05 $\mu$m and 3.0 $\mu$m.

The surface extent of the overlapping portion may be between 10 % and 95 % of the surface area of the laser footprint.

The peak power of the laser beam pulses may be between 5 kW and 1000 kW.

The rotation speed of the cylindrical body may be between 5 RPM and 250 RPM, optionally between 20 RPM and 100 RPM.

It should also be noted that, in accordance with an embodiment of the restoration procedure 2000 whose flowchart is shown in Figure 13, the restoration procedure 2000 of apparatus 10 may include the step of defining the overlapping portions 41 between at least two laser 40 footprints without the restoration procedure 2000 necessarily including the 2001 detection step.

Additionally, the extent of the overlapping portion 41 may be dependent on the oscillation frequency of the laser beam 12 determined by the oscillation system. Indeed, it should be noted that in order to obtain overlapping portions 41 between consecutive laser 40 footprints, the frequency of the laser pulses 12 must be related to the oscillation frequency of the laser beam and the surface extent of the laser footprints.

To obtain overlapping portions 41, the average laser beam displacement velocity $V_{osc}$ at the lateral surface 4 of the cylindrical body 1 must be less than the product of the pulse frequency $f_{imp}$ and a parameter D representative of a laser footprint size 40, in accordance with the following formula:

$$L \cdot f_{osc} < D \cdot f_{pulse}$$

where:

- $f_{osc}$ is the oscillation frequency of the laser beam that may be determined by the oscillation system, said oscillation frequency being specifically expressed in Hz;
- **D** is a representative parameter of the size of said laser 40 footprints, said representative parameter D being specifically a linear dimension e.g. expressed in mm;
- **L** is the amplitude of oscillation of the laser beam at the lateral surface 4 of the cylindrical body 1, said amplitude of oscillation of the laser beam being specifically expressed in mm, specifically where the amplitude of oscillation L is between 0.05 mm and 5 mm, more specifically between 0.1 mm and 2 mm;
- $f_{pulse}$ is the frequency of laser pulses, said laser pulse frequency being specifically expressed in Hz.

In the case where the laser footprint 40 has a circular shape, the parameter D corresponds to the diameter of the laser footprint.

Specifically, based on the above formula, control unit 15 may be configured to determine the oscillation frequency of the oscillation system according to the following formula to obtain overlapping portions 41:

$$f_{osc} < \frac{D}{T \cdot L}$$

where:

- **T=1/f$_{pulse}$** is the time interval between two laser pulses, said time interval being the inverse of the pulse frequency f$_{pulse}$ of the laser beam, for example said time interval being expressed in seconds.

For example, control unit 15 may be configured to vary the oscillation frequency according to the size of the single crater of material removed by a single laser pulse: the smaller the craters, the lower the oscillation frequency must necessarily be to obtain overlapping portions 41. In more detail, to obtain overlapping portions 41 between the various consecutive laser 40 footprints between them, the control unit 15 may be configured to determine the oscillation frequency of the oscillation system as a function of a size D of the laser 40 footprints, a frequency of the laser pulses, and an oscillation amplitude of the laser pulses. For example, control unit 15 is configured to decrease the oscillation frequency as the dimension D of laser footprints 40 decreases. Also, having fixed an oscillation frequency, control unit 15 may be configured to, in order to obtain overlapping portions 41, increase the size D of the laser footprints 40 as the oscillation amplitude of the laser beam increases. Similarly, in order to obtain overlapping portions 41, control unit 15 may be configured to, in order to obtain overlapping portions 41, increase the oscillation frequency as the size of the laser footprints 40 increases.

Note that the distance Z between a first laser footprint and a second laser footprint is therefore dependent on the pulse frequency, the oscillation frequency of the laser beam and the oscillation amplitude of the laser beam, as shown in Figure 12b. Specifically, the Z distance may be calculated by the following formula:

$$Z = \frac{L \cdot f_{osc}}{f_{pulse}} < D$$

where:

- **f$_{osc}$** is the oscillation frequency of the laser beam that may be determined by the oscillation system, said oscillation frequency being specifically expressed in Hz;
- f$_{pulse}$ is the frequency of laser pulses, said laser pulse frequency being specifically expressed in Hz;
- **L is** the amplitude of oscillation of the laser beam at the lateral surface 4 of the cylindrical body 1, said amplitude of oscillation of the laser beam being specifically expressed in mm, specifically where the amplitude of oscillation L is between 0.05 mm and 5 mm, more specifically between 0.1 mm and 2 mm;
- **D** is the representative parameter of the size of said laser 40 footprints, said representative parameter D being specifically a linear dimension for example expressed in mm.

Figure 12b also shows an embodiment of apparatus 10 in which the oscillation system is configured to move the laser beam along an oscillation direction substantially parallel to the rotation axis K of the cylindrical body 1. The rotation of the cylindrical body during the removal procedure, combined with the movement of the laser beam along an oscillation direction substantially parallel to the axis of rotation K of the cylindrical body 1, results in the peculiar serpentine path, particularly the symmetric zigzag path, of the laser footprints on the lateral surface 4 of the cylindrical body 1. In particular, the zigzag path is defined as a broken line that forms a continuous series of angles: in fact, the zigzag path is a shape described by a line that is interrupted by continuing alternately in opposite directions at constant angles.

Restoration procedure 2000 of the cylindrical body 1

The present invention is also directed to a restoration procedure 2000 of the lateral surface 4 of the cylindrical body 1, performed by the previously described apparatus 10 by emitting a laser beam suitable for removing material from the lateral surface 4 of the cylindrical body. The steps, described below, of the restoration procedure may be controlled and synchronized with each other by the control unit 15 of the apparatus. Additionally, these steps define a relative method for restoring/rectifying the lateral surface of the cylindrical body by the action of a laser beam.

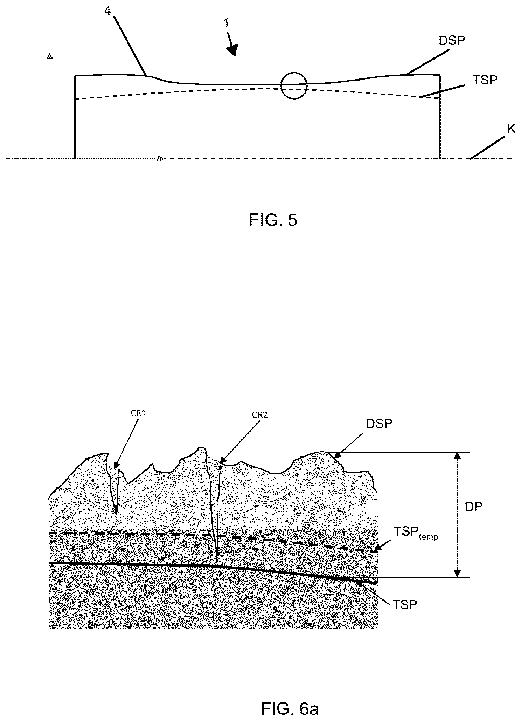

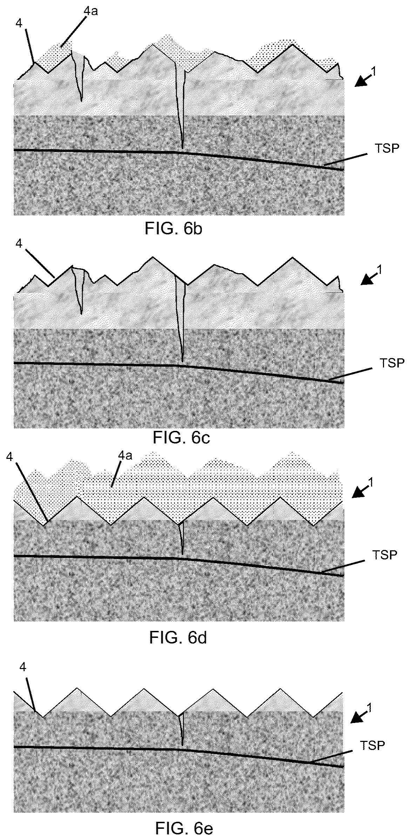

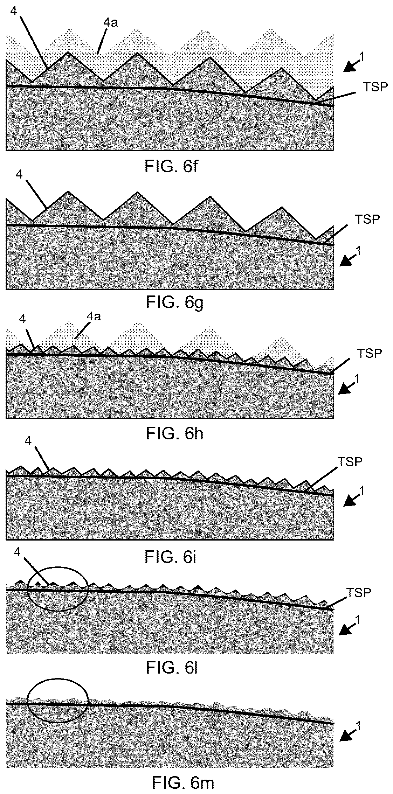

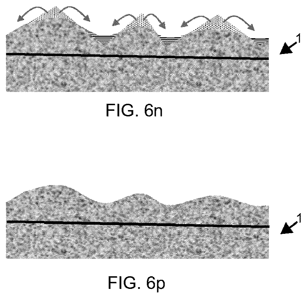

The restoration procedure includes a detection procedure 2001 including at least the step of detecting, by means of the profile detector 700, the detected surface profile DSP of the cylindrical body 1, in accordance with what is described in the previous section and as shown schematically in Figures 5 and 6. The detected surface profile DSP of cylindrical body 1 then defines the worn profile of the rolling cylinder that needs to be processed to be within the tolerances of the rolling mill.

The control unit may be configured to move the profile detector 700 along the Detection axis Y and simultaneously detect, along the detection axis Y, the surface profile DSP using the profile detector 700. The control unit may also be configured to associate the geometric feature of the detected surface profile DSP of cylindrical body 1 with a respective linear position along the detection axis Y, to define a surface profile map of the cylindrical body. The step of moving the profile detector 700 along the Detection axis Y thus allows the surface profile of the cylindrical body to be detected along a substantially straight line.

Optionally, the control unit is configured to move the cylindrical body 1 in rotation about the rotation axis K: for example, the control unit may drive an electric motor operatively connected to the cylindrical body to place the cylindrical body 1 in rotation, at a predefined angular speed. The control unit may then be configured to detect the DSP surface profile by means of the profile detector 700, the latter moved along the detection axis Y as the cylindrical body rotates.

The combination of motion of the profile detector 700 parallel to the axis of rotation of the cylindrical body, and the angular motion of the cylindrical body 1 allows the generation of a surface profile, dependent on the linear position of the profile detector 700. Thus, the surface profile is not affected by the trend of a single longitudinal portion of the lateral surface of the cylindrical body, but is averaged along the revolutions of the cylindrical body during profile acquisition. In other words, an average value is selected among all the points at different angular positions detected during a complete revolution of the cylinder and corresponding to an appropriate surround of the Y-coordinate, allowing for simultaneous measurement of roundness and eccentricity errors along the cylinder table.

The control unit may be configured to move the profile detector 700 along the Detection axis Y while the cylindrical body is fixed in an angular position, and then move the cylindrical body one step in rotation to define a new angular position and detect the profile along the Detection axis Y while the cylindrical body is fixed in the new angular position.

Similarly, it is possible for the control unit to be configured to perform the opposite procedure, i.e., moving the cylindrical body in rotation and simultaneously detecting the surface profile using the profile detector 700, and then moving the profile detector 700 one step along the detection axis Y to define a new linear position of the detector.

In an alternative embodiment, the control unit may be configured to first move the profile detector 700 along the detection axis Y while the cylindrical body is fixed at an angular position, and then move the cylindrical body in rotation at a predefined angular speed and simultaneously detect the surface profile by the profile detector 700 at predefined Y-axis positions, such as at the ends of the table and its middle part.

In an alternative embodiment, the control unit may command that the rotation of the cylindrical body and the linear movement of the profile detector 700 along the Y axis occur simultaneously: in this case, the control unit is then configured to associate each geometric feature of the DSP-detected surface profile of the cylindrical body 1 with a respective linear position of the profile detector 700 and optionally with a respective angular position of the cylindrical body 1.

The detection procedure also includes a step of comparing the detected DSP surface profile with a TSP target surface profile of the cylindrical body 1. The TSP target surface profile is a profile that the recovery procedure aims to obtain after grinding. In general terms, note that the TSP target surface profile defines an average diameter of cylindrical body 1 that is smaller than a respective average diameter of cylindrical body 1 defined by the Detected surface profile DSP. In other words, there is a thickness of material to be removed between the TSP target surface profile and the Detected surface profile DSP that the restoration procedure has to remove to allow the TSP target surface profile to emerge.

The control unit may be configured to calculate the TSP target surface profile, or it may be configured to receive the TSP target surface profile as input. In the case where the control unit is configured to calculate the TSP target surface profile, the control unit is configured to detect the initial surface profile, check for defects, cracks, or local surface damage, and define the TSP target surface profile at a depth, relative to the detected surface profile, greater than a maximum depth of a defect or crack present on the lateral surface. Figure 6a schematically illustrates this concept: depending on an initial minor defect CR1, the control unit is configured to define a temporary target surface profile $TSD_{temp}$ , highlighted by the dashed line: the depth of the temporary target surface profile $TSD_{temp}$ , allows sufficient material to be removed to eliminate the surface defect CR1. However, during a further detection step, the profile detector may detect a second defect CR2, deeper than the first defect CR1, and intersecting the temporary target surface profile $TSD_{temp}$ : as a result, the temporary target surface profile $TSD_{temp}$ would not allow the second surface defect CR2 to be totally removed. The control unit is then configured to update the target profile and define a new target profile TSP placed at a depth, relative to the detected surface profile, greater than the maximum depth defined by the second defect CR2. In this way, the removal of the material to be removed interposed between the detected surface profile and the new target surface profile TSD also allows the defect CR2 to be completely removed.

In other words, the control unit is configured to define the target surface profile according to the detected surface profile such that if the target surface profile intersects the detected surface profile, the control unit is configured to reduce a diameter of the cylindrical body on which to define the target surface profile.

The target surface profile is considered final only after the profile detector and defect detector, if any, have completed the profile (and defect, if any) detection operations on the entire lateral surface 4 of the cylindrical body.

Similar to what has been described with respect to the detected surface profile DSP of the cylindrical body 1, the target surface profile TSP of the cylindrical body 1 comprises at least one geometric feature varying as a function of at least one between an angular position of the cylindrical body 1, and a linear position along the detection axis Y. The geometric feature of the target surface profile TSP includes at least one respective target altimetric parameter representative of a diameter of the cylindrical body 1 and/or a variation of said diameter of the cylindrical body 1 and/or a distance interposed, in an operating condition and subsequent to the removal procedure, between the lateral surface 4 of the cylindrical body 1 and the profile detector 700.

The comparison between the detected surface profile DSP and the target surface profile TSP, defines a differential parameter DP. Specifically, the differential parameter is defined by the comparison between the altimetric parameter of the detected surface profile DSP and the altimetric parameter of the target surface profile TSP, as shown schematically in Figures 5 and 6a. The differential profile parameter DP is representative of a difference or ratio between the detected surface profile DSP and the target surface profile TSP, as shown in Figure 6a. In other words, the DP differential parameter is representative of the amount of material to be removed interposed between the detected surface profile DSP and the TSP target surface profile.

The restoration procedure also includes a material removal procedure 2002 from the lateral surface 4 of the cylindrical body 1: specifically, the removal procedure includes at least the step of emitting a laser beam through the laser emitter 600, 600" toward the lateral surface 4 of the cylindrical body 1 to remove material from the surface until the difference between the detected surface profile DSP and the target surface profile TSP is within a predetermined tolerance.

The removal procedure is performed according to the comparison between the detected surface profile DSP and the target surface profile TSP, i.e., according to the differential parameter DP. Therefore, the removal procedure is apt to remove the material to be removed interposed between the target surface profile and the detected surface profile: note that the detected surface profile is a worn profile presenting substantially random variations: the differential parameter DP may therefore vary as a function of the angular position of the cylindrical body and/or the position of the profile detector: in other words, the portion of material to be removed varies as the position identified on the lateral surface 4 of the cylindrical body 1 varies.

The control unit, during the removal procedure, is then configured to modulate, depending on the differential parameter of the profile, at least one control parameter of the laser beam emitted by the laser emitter 600, 600": the control parameter may include an average laser beam power, a peak laser beam power, a duration of laser beam pulses, a duration of the intervals between laser beam pulses, a laser beam size, a distance between the 600, 600" laser emitter and the outer surface of the cylindrical body 1.

For example, as the value of the differential parameter increases, the control unit may be configured to increase one or more among the peak power of the laser beam, the average power of the laser beam, or the time duration of exposure of a portion of the lateral surface 4 to the laser beam. Additionally, as the value of the differential parameter increases, the control unit may be configured to reduce at least one among the angular velocity of the cylindrical body 1, the displacement velocity of the laser emitter 600, 600" along the main direction Z, and the pulse duration of the laser beam.

Conversely, as a value of the differential parameter decreases, the control unit may be configured to reduce at least one of the exposure time duration, the peak power of the laser beam, and the average power of the laser beam.

Additionally, as the value of the differential parameter decreases, the control unit may be configured to increase at least one of the cylindrical body angular velocity 1, the laser emitter 600, 600" displacement speed along the main direction Z, and the duration of the laser beam pulses.

Additionally, the laser beam control parameter may include a displacement speed of the laser emitter 600, 600" along the main direction Z during a laser beam emission toward the outer surface of the cylindrical body 1, an angular velocity of the cylindrical body 1 about its axis of rotation K during a laser beam emission toward the outer surface of the cylindrical body 1, a number of passes in which the laser beam insists on the same portion of the lateral surface 4 of the cylindrical body 1. Additionally, the control parameter of the laser beam may include an exposure time duration in which said laser beam insists on the same portion of the lateral surface 4 of the cylindrical body 1: note that the exposure time duration depends on the angular velocity of the cylindrical body 1 and the displacement velocity of the laser emitter 600, 600".

The laser beam control parameter may also include an energy parameter representative of an energy emitted by the laser beam at the same portion of the lateral surface 4 of the cylindrical body 1. The energy parameter may depend on a combination of at least two in the group between a control parameter of the laser emitter 600, 600", the displacement velocity of the laser emitter 600, 600" along the main axis Z, the angular velocity of the cylindrical body 1 about its axis of rotation K, the time duration of exposure, or the number of passes of the laser beam at the same portion of the lateral surface 4 of the cylindrical body. For example, the energy parameter may be calculated as a function of the peak power of the laser beam pulses, an exposure duration, and a frequency of the laser beam pulses. Alternatively, the energy parameter may be calculated as a function of the average power and exposure duration of the surface to the laser beam.

The laser beam emitted toward the lateral surface 4 of the cylindrical body is then configured to locally remove metallic material from the cylindrical body 1. In order to determine the removal of material, and conversely to avoid melting of the material itself, the control unit 15 is configured, during the removal procedure, to emit a pulsed laser beam: these pulses may have a duration between 100 fs and 1000 ns or between 1 fs and 1000 $\mu$s, and/or a peak power between 1 kW and 10 MW, particularly between 10 kW and 2 MW. The average laser beam power for material removal is between 5 W and 500W, specifically between 10 W and 200 W.

In order to determine material removal, the control unit is configured to emit a pulsed laser beam in which the peak power is greater than the respective average power, specifically greater than 10, 100 or 1000 times of the respective average power.

A laser beam having such characteristics makes it possible to remove material from the cylindrical body 1, generating a powder of metallic material, particularly steel. The removal of material by laser thus consists of a sublimation of the material hit by the laser beam, material that, after moving away from the surface of the cylinder in the vapor phase, recondenses and solidifies a few moments later, generating dust of metallic material: the suction system 20 is therefore configured to suck up the metallic dust in order to reduce risks to human health.

The recovery procedure involves running the detection procedure and the removal procedure iteratively in a loop to define a closed-loop control system: specifically, this loop defines an incremental number of laser beam passes. This allows the control unit to verify the surface condition subsequent to each pass of the laser beam, or after a predefined number of laser beam passes. Once the actual surface conditions have been verified and the differential parameter updated, the control unit may control the laser emitter again according to the updated differential parameter: for example, if the updated differential parameter is different from the previously determined differential parameter, the control unit may be configured to vary one or more of the laser beam control parameters.

Listed below are, in accordance with an embodiment, the steps of the cylindrical body restoration procedure.

The control unit, during the removal procedure, is configured to:

- command the workstation motor to rotate the cylindrical body 1 about its axis of rotation K;
- move the laser emitter along the main axis Z;
- emit the laser beam through the laser emitter in the direction of the working site to remove metal material from the lateral surface 4 of the cylindrical body 1.

The steps of rotating the cylindrical body 1 and moving the laser emitter are performed at full coverage of the surface profile of the cylindrical body 1. The steps of rotating the cylindrical body about its axis of rotation K and moving the laser emitter along the main axis Z during the removal procedure may be performed sequentially, i.e., in which the step of moving the laser emitter is after or before the step of rotating the cylindrical body 1, or simultaneously, i.e., in which the step of moving the laser emitter along the main axis Z is simultaneous, in part or entirely, with the step of rotating the cylindrical body 1.

The removal procedure involves making at least one first and one second pass, optionally making "n" passes with $2 \leq n \leq 20$, of the laser beam at one or more portions of interest of the lateral surface 4 of the cylindrical body 1 to remove a predetermined amount of material during each pass. The control unit is then configured to make a first pass with the laser beam over a portion of interest of the surface of the cylindrical body, detect an updated profile of the cylindrical body 1 at the portion of interest, compare the updated profile with the TSP target surface profile, and make a second pass with the laser beam by modulating the laser beam emitted by the laser emitter 600, 600" according to the comparison between the updated profile and the TSP target surface profile. This procedure allows updating the differential parameter and modulating the laser beam according to the updated differential parameter.

The removal procedure may include a roughing procedure (Figures 6a-6g) and a semi-finishing procedure (Figures 6h-6l). Specifically, the control unit is configured to define, during the removal procedure, a roughing procedure including at least one of:

- command the laser emitter (600, 600") to generate a pulsed laser beam, each of said pulses having an initial time duration in particular within an order of magnitude between 1 ns and 1000 ns;

- optionally command the laser emitter (600, 600") to generate a laser beam having a size less than 50 $\mu$m, specifically less than 20 $\mu$m, said size being the beam diameter.

The control unit is also configured to define, during the removal procedure, a semi-finishing procedure including the step of commanding the laser emitter 600, 600" to generate a pulsed laser beam, each of said pulses having a second time duration shorter than the first time duration.

In particular, the second time duration is at least 10, 100, or 1000 times smaller than the first time duration: for example, the second time duration may be within an order of magnitude between 1 fs and 1000 ps, preferably less than 10 ps.

The semi-finishing procedure may also include commanding the 600, 600" laser emitter to generate a laser beam having a size less than 50 μm, particularly less than 20 μm, the size being the beam diameter.

The roughing procedure is configured to define on the lateral surface 4 of the cylindrical body 1 a first surface roughness, while the semi-finishing procedure is configured to define on the lateral surface 4 of the cylindrical body 1 a second surface roughness: the first surface roughness is greater than the second surface roughness, in particular the first surface roughness may be "n" times greater than the second surface roughness with 1.1 <n<5.

The average power of the laser emitter (600, 600") during the roughing procedure may be basically the same as the average power of the 600, 600" laser emitter during the semi-finishing procedure: the average power may be between 0.5 W and 500 W, especially between 1 W and 200 W.

The peak power of the laser beam emitted by the 600, 600" laser emitter during the roughing procedure may be lower than the peak power of the laser beam emitted by the 600, 600" laser emitter during the semi-finishing procedure: further the peak power of the laser beam in the roughing procedure may be 10, 100 or 1000 times lower than the peak power of the laser beam in the semi-finishing procedure. The peak power of the laser beam in the roughing procedure may be between 10 kW and 100 KW, and the peak power of the laser beam in the semi-finishing procedure being between 10 kW and 10 MW.

For example, the first average surface roughness (Ra) may be between 0.8 μm and 2.0 μm, while the second average surface roughness may be between 0.2 μm and 0.8 μm.

The removal procedure may further comprise a finishing procedure, subsequent to the roughing and semi-finishing procedures, comprising at least one among the step of commanding the laser emitter 600, 600" to generate a laser beam of the continuous type or pulses having a long time duration. In particular, the time duration of the laser beam pulses in the finishing procedure is longer than the time duration of the laser beam pulses emitted in the roughing procedure and/or the semi-finishing procedure.

Further, in the finishing procedure, the respective peak power of the laser beam is less than a peak power of the laser beam emitted during the roughing and/or semi-finishing procedure: in particular, the peak power of the laser beam of the finishing procedure is 10, 100 or 1000 times less than a peak power of the laser beam emitted in the roughing and semi-finishing procedure. The control unit may also be configured, in the finishing procedure, to command the laser emitter 600, 600" to generate a laser beam having a size, such as a diameter, greater than a respective size of the laser beam emitted during the roughing and/or semi-finishing procedure.

The finishing procedure is configured to define on the lateral surface 4 of the cylindrical body 1 a finishing surface roughness less than a surface roughness defined during the roughing or semi-finishing procedure. The average surface roughness (Ra) obtained by the finishing procedure is less than 0.5 μm, specifically 0.4 μm.

The following is a table indicating preferred values of laser beam control parameters related to a lateral surface cleaning operation, roughing procedure, semi-finishing procedure, and finishing procedure. These values are not intended to be limiting, but on the contrary are intended to provide an order of magnitude of average, standard or preferred values of laser beam control parameters for different applications.

| | Cleaning:<br>Removal of oxides, debris, dirt | Roughing:<br>high material removal High roughness<br>Ra = 0.8 μm - 2.0 μm | Semi-finishing:<br>reduction of surface roughness<br>Ra = 0.2 μm - 0.8 μm | Finish<br>Ra ≤ 0.4 μm |
|---|---|---|---|---|
| **Laser emission** | Pulse | Pulse | Pulse | Continuous or pulsed |
| **Pulse duration** | From *ns* to *ps* or fs | *ns* | *ps - fs* | Continuous or pulses of long duration from μs to ms |
| **Average power** | >10 W, also up to 1 kW | 10 W - 200 W | 10-200W | >10 W, also up to 1 kW |
| **Peak pulse power** | >10 kW | > 10 kW | > 10 kW or >1 MW | 10 W - 1 kW |
| **Head** | Scanner | Proximity head or scanner | Proximity head or scanner | Proximity head or scanner |
| **Beam** | Scanning | Scanning/Fixed | Scanning/Fixed | Scanning/Fixed |

(continued)

| | Cleaning:<br>Removal of oxides, debris, dirt | Roughing:<br>high material removal High roughness<br>Ra = 0.8 $\mu$m - 2.0 $\mu$m | Semi-finishing:<br>reduction of surface roughness<br>Ra = 0.2 $\mu$m - 0.8 $\mu$m | Finish<br>Ra $\leq$ 0.4 $\mu$m |
|---|---|---|---|---|
| **Beam size** | <100 $\mu$m, preferably <50 $\mu$m | <50 $\mu$m, preferably <20 $\mu$m | <50 $\mu$m, preferably <20 $\mu$m | >100 $\mu$m, preferably >200 $\mu$m |
| **Protective gas** | Absent | $N_2$ , Ar, He or other inert or $O_2$ or other inert | $N_2$ , Ar, He or other inert | $N_2$ , Ar, He or other inert |

In an embodiment shown schematically by the flowcharts in Figures 13 and 14, the removal procedure 2002 may include:

- moving 2002a at least one between the cylindrical body 1 and the laser emitter 600, 600", and
- commanding the at least one laser emitter 600, 600" to emit 2002b a pulsed laser beam, in which the laser pulses remove material from the cylindrical body 1.

The step of moving 2002a at least one between the cylindrical body 1 and the 600, 600" laser emitter preferably includes placing the cylindrical body 1 in rotation around its axis of rotation K.

The step of moving 2002a at least one between the cylindrical body 1 and the laser emitter 600, 600" may additionally include controlling the oscillation system to determine the oscillation of the laser beam. The oscillation of the laser beam and the rotation of the cylindrical body may be simultaneous steps with each other, as in the embodiment in Figure 12b.

The step of moving 2002a the cylindrical body 1 and/or the 600, 600" laser emitter and the phase of emitting 2002b a pulsed laser beam are essentially simultaneous with each other: in other words, during the rotation of the cylindrical body, the laser emitter emits laser pulses on the lateral surface of the cylindrical body.

The laser beam pulses are temporally staggered with each other to define a laser pulse frequency between 10 kHz and 10,000 kHz.

Each pulse directed toward the lateral surface 4 of the cylindrical body 1 defines on the lateral surface 4 of the cylindrical body 1 a respective laser footprint 40 as shown in Figures 10 to 12 and 12b. The laser footprint may have a shape in the group between circular, elongated circular, elliptical, and curvilinear having a convex contour. The shape of a laser footprint may vary as a function of a duration of the laser beam pulse defining the laser footprint, a rotation speed of the cylindrical body around the rotation axis K during the emission of the laser pulse, or a relative speed between the laser beam and the surface of the cylindrical body. The laser footprint may have a surface extent between 70 $\mu$m$^2$ and 20,000 $\mu$m$^2$.

Note that each laser pulse 10 results in the formation of a crater on the lateral surface 4 of the cylindrical body 1. Such a crater may have a shape and/or surface extent substantially equal to the shape and/or surface extent of the laser footprint. Optionally, the crater may have a slightly smaller surface extent than the surface extent of the laser footprint. Each crater may have a depth between 1 $\mu$m and 20 $\mu$m.

Similarly, an overlapping portion 41 generated by the partial overlap of a first laser pulse and a second laser pulse also results in the formation of a crater on the lateral surface 4 of the cylindrical body 1: such a crater may have a depth of 10 $\mu$m to 100 $\mu$m.

During the removal procedure 2002, the laser pulses define 2002c laser footprints at least in partial overlap with each other by forming respective overlapping portions between said laser footprints. Note that the step 2002c of defining laser footprints at least in partial overlap with each other may be in combination with the step 2001 of detecting the surface profile of the cylindrical body, as described above: such an embodiment is shown schematically in the flow chart in Figure 14.

Alternatively, in accordance with a further embodiment, the restoration procedure 2000 may include the removal procedure 2002, which in turn includes the step 2002c of defining laser footprints at least partially overlapping each other, without necessarily including the 2001 step of detecting the surface profile of the cylindrical body: this embodiment is shown schematically in the flow chart in Figure 13.

Each portion of the overlay may extend for a surface extent of between 10% and 95%, optionally between 25% and 75%, of a surface extent of the laser footprint. Optionally, the overlapping portion may extend for a surface extent substantially equal to 50 % of a surface extent of the laser footprint.

Note that the present method for surface restoration of cylindrical bodies is a method of grinding the lateral surface 4 of said cylindrical bodies 1. Specifically, this grinding method removes from the rolling cylinder a surface layer having a thickness, measured along a radial direction of the cylindrical body, between 10 $\mu$m and 100 $\mu$m.

The lateral surface 4 of these rolling cylinders is made of metallic material, for example, a material including steel or cast iron.

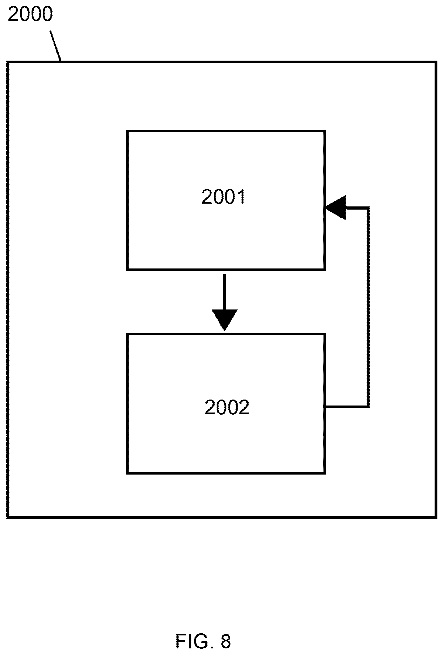

Note also that the methods described above, and schematized by the flowcharts shown in Figures 8, 13 and 14, may be performed by apparatus 10 previously described. In particular, the restoration procedure 2000, and then the removal procedure 2002, are controlled by the control unit 15 of the apparatus. In greater detail, in accordance with the embodiment of figure 14, the control unit 15 of the apparatus performs the detection procedure 2001 and the removal procedure, the latter comprising the steps of moving 2002a the cylindrical body and/or the laser emitter, emitting 2002b the laser beam toward the lateral surface 4 of the cylindrical body, and defining 2002c the overlapping portions 41 between the laser footprints 40.

## Claims

1. **Apparatus** (10) for surface processing of cylindrical bodies (1), particularly for surface restoration of rolling cylinders, said apparatus comprising:

   - a workstation (100) defining at least one operating location arranged to receive, in an apparatus operating condition (10), a cylindrical body (1) having a lateral surface (4), said workstation (100) being configured to rotationally support the cylindrical body (1) according to a predetermined axis of rotation (K),
   - at least one laser emitter (600, 600") cooperating with the workstation (100) and configured to emit at least one pulsed laser beam in the direction of said operating site, said laser emitter (600, 600") being movable at least along a main axis (Z) substantially parallel to the axis of rotation (K) of the cylindrical body (1),
   - a control unit (15) operatively connected with the laser emitter (600, 600") and configured to perform, during said operating condition of the apparatus (1), at least one restoration procedure (2000) of the lateral surface (4) of the cylindrical body (1),
   said restoration procedure (2000) including a removal procedure (2002) including at least the following steps:

     ○ moving (2002a) at least one between the cylindrical body (1) and said at least one laser emitter (600, 600"),
     ○ commanding the at least one laser emitter (600, 600") to emit (2002b) said pulsed laser beam, said pulses being capable of removing material from the cylindrical body (1),

   said pulses of the laser beam are temporally staggered with each other,
   each pulse directed toward the lateral surface (4) of the cylindrical body (1) is configured to define, on said lateral surface (4) of the cylindrical body (1) during said operating condition of the apparatus, a respective laser footprint (40),
   said laser pulses define laser footprints (40) at least in partial overlap with each other by forming respective overlapping portions (41) between said laser footprints.

2. Apparatus according to claim 1, wherein each overlapping portion (41) extends by a surface extent between 25% and 75% of a surface extent of the laser footprint (40), optionally said surface extent of the overlapping portion (41) being between 50% and 75% or between 25% and 50%.

3. Apparatus according to claim 1 or claim 2, wherein each overlapping portion is defined by the overlap of a first laser print with a second laser print immediately consecutive temporally to said first laser print;
   in particular wherein said laser beam pulses are temporally staggered with each other to define a pulse frequency between 10 kHz and 10000 kHz, and wherein said second laser footprint is defined with a time delay from the first laser footprint equal to the inverse of said pulse frequency.

4. Apparatus according to claim 3, wherein the control unit (15) is configured, during the removal procedure, for:

   - commanding the rotation of the cylindrical body (1) around the axis of rotation (K) at a predefined speed;
   - commanding the at least one laser emitter (600, 600") to emit a first laser pulse to define said first laser imprint on the cylindrical body;
   - commanding the at least one laser emitter (600, 600") to emit a second laser pulse to define said second laser imprint on the cylindrical body, said second laser imprint being partially superimposed on said first laser imprint,

the second laser pulse being immediately temporally consecutive to said first laser pulse, in particular the second laser pulse being emitted with a time delay, relative to the first laser pulse, equal to the inverse of said laser pulse frequency.

5. Apparatus according to claim 4, the control unit (15) is configured, during the removal procedure (2002), to:

- command the at least one laser emitter (600, 600") to emit a third laser pulse, temporally subsequent to said first laser pulse and to said second laser pulse, to define a third laser imprint on the cylindrical body partially overlapping said second laser imprint and external or tangent to said first laser imprint,

or

- command the at least one laser emitter (600, 600") to emit a third laser pulse, temporally subsequent to said first laser pulse and said second laser pulse, to define a third laser imprint on the cylindrical body partially overlapping said second laser imprint and said first laser imprint.

the third laser pulse being immediately consecutive temporally to said second laser pulse,

in particular the third laser pulse being emitted with a time delay relative to the second laser pulse equal to the inverse of said pulse frequency.

6. Apparatus according to any one of the preceding claims, wherein the control unit (15) is configured to command the at least one laser emitter (600, 600") to direct the laser beam to a focus point, said focus point defining a minimum spatial dimension of the laser beam, specifically where laser beam defining beams converge to said focus point.

7. Apparatus according to claim 6, wherein the control unit (15) is configured to command the at least one laser emitter (600, 600") to define said focus point at a blurring distance ($\Delta f$) relative to a reference plane defined, during an operating condition of the apparatus, by the lateral surface (4) of the cylindrical body (1), wherein said blurring distance ($\Delta f$) has a non-zero value;

optionally wherein said blurring distance ($\Delta f$) is between 0.01 mm and 2 mm in absolute value, specifically between 0.1 mm and 1 mm, more specifically between 0.1 mm and 0.5 mm.

8. Apparatus according to claim 7, wherein the focus point is at a blurring distance ($\Delta f$) >0, the focus point being outside the cylindrical body 1, in particular said focus point being interposed between the laser emitter (600, 600") and the lateral surface (4) of the cylindrical body (1).

9. Apparatus according to claim 7 or 8, wherein the control unit (15) is configured to command the at least one laser emitter (600, 600") to vary said blurring distance ($\Delta f$) between:

- a positive value of said blurring distance ($\Delta f$) where the focus point is outside the cylindrical body, and
- a negative value of said blurring distance ($\Delta f$) where the focus point is inside the cylindrical body,
in particular wherein, during the removal procedure, the control unit (15) is configured to command the laser emitter (600, 600") to define a blurring distance ($\Delta f$) between +2 and -2 mm,
more particularly between 0.01 mm and 2 mm.

10. Apparatus according to any one of the preceding claims, wherein a/the frequency of the laser pulses is greater than a/the rotation frequency of the cylindrical body (1), wherein said rotation frequency of the cylindrical body is defined as a number of complete rotations of the cylindrical body (1) around its axis of rotation (K) per second;

optionally wherein the frequency of the laser pulses is at least "n" times greater than the frequency of rotation of the cylindrical body (1), where n>100, specifically n>500, more specifically n>1000, even more specifically n>3600;

wherein the rotation frequency of the cylindrical body (1) is between 5 RPM and 250 RPM, optionally between 20 RPM and 100 RPM;

further wherein the control unit (15), depending on a desired surface extent of the overlapping portion, is configured to:

- calculate and command the frequency of laser beam pulses, and
- calculate and command a rotational speed or frequency of rotation of the cylindrical body (1).

11. Apparatus according to any one of the preceding claims, wherein the control unit (15), during the removal procedure (2002), is configured to:

- receive as input or calculate a desired surface extent of the overlapping portion;
- according to the desired surface extent of the overlapping portion (41), calculate:

  ∘ said pulse frequency of the laser beam,
  ∘ said rotational speed or rotational frequency of the cylindrical body (1),

- perform the removal procedure (2002), by setting said calculated laser beam pulse frequency and rotation speed of the cylindrical body;

**optionally** wherein said laser footprint (40) presents a shape in the group between circular, elongated circular, elliptical, curvilinear having convex contour.

12. Apparatus according to any one of the preceding claims, wherein the control unit (15) is configured to:

   - receive as input a desired maximum surface roughness of the cylindrical body,
   - depending on said maximum desired surface roughness, calculate at least one of:

     ∘ a surface extent, optionally a range of values of said surface extent, of the overlapping portion
     ∘ a ratio between a surface extent of the overlapping portion (41) and a surface extent of the laser footprint (40);

   - according to said surface extent of the overlapping portion or said ratio, calculate at least one among:

     ∘ a peak power of the laser beam pulses,
     ∘ an average power of the laser beam pulses,
     ∘ a rotational speed of the cylindrical body,
     ∘ a frequency of laser pulses;

   in particular wherein said maximum surface roughness is between 0.05 $\mu$m and 3.0 $\mu$m, and said surface extent of the overlapping portion is between 10% and 90%, specifically between 25% and 75%, of the surface area of the laser footprint.

13. A method for surface restoration of a cylindrical body (1) comprising a step of performing a procedure of removing (2002) material from the cylindrical body, said removal procedure (2002) comprising a step of emitting (2002b) consecutive laser pulses to each other toward the lateral surface (4) of the cylindrical body (1), wherein each laser pulse defines (2002c), on said lateral surface (4) of the cylindrical body (1), a respective laser footprint, said laser pulses defining laser footprints (40) at least partially overlapping each other by forming respective overlapping portions (41) between said laser footprints, optionally wherein the restoration method is performed by an apparatus (10) according to any one of the preceding claims.

14. Method according to claim 13, wherein the at least one laser emitter (600, 600") directs the laser beam to a focus point, said focus point defining a minimum spatial dimension of the laser beam, specifically where laser beam defining beams converge to said focus point;

   wherein said focus point is at a blurring distance ($\Delta$f) relative to a reference plane defined, during an operating condition of the apparatus, by the lateral surface (4) of the cylindrical body (1), wherein said blurring distance ($\Delta$f) has a non-zero value;
   optionally wherein said blurring distance ($\Delta$f) is between 0.01 mm and 2 mm in absolute value, specifically between 0.1 mm and 1 mm, more specifically between 0.1 mm and 0.5 mm.

15. Method according to claim 13 or 14, wherein the focus point is at a blurring distance ($\Delta$f) >0, which indicates that the focus point is outside the cylindrical body 1, in particular said focus point is interposed between the laser emitter (600, 600") and the lateral surface (4) of the cylindrical body (1).

FIG. 1

FIG. 2

FIG. 3

FIG. 4

FIG. 5

FIG. 6a

FIG. 6b

FIG. 6c

FIG. 6d

FIG. 6e

FIG. 6f

FIG. 6g

FIG. 6h

FIG. 6i

FIG. 6l

FIG. 6m

FIG. 6n

FIG. 6p

FIG. 7a

FIG. 7b

2000

2001

2002

FIG. 8

FIG. 9

FIG. 10

FIG. 11

FIG. 12

$$Z = (L \cdot f_{osc})/f_{pulse}$$

FIG. 12b

2000

2002

2002a

2002b

2002c

FIG. 13

2000

2001

2002

2002a

2002b

2002c

FIG. 14